(19) **Europäisches Patentamt / European Patent Office / Office européen des brevets**

(11) **EP 2 612 226 B1**

(12) **FASCICULE DE BREVET EUROPEEN**

(45) Date de publication et mention
de la délivrance du brevet:
**28.03.2018 Bulletin 2018/13**

(21) Numéro de dépôt: **11773020.0**

(22) Date de dépôt: **02.09.2011**

(51) Int Cl.:
*G06F 3/046* (2006.01)   *A63F 3/00* (2006.01)
*H04B 5/00* (2006.01)

(86) Numéro de dépôt international:
**PCT/FR2011/052012**

(87) Numéro de publication internationale:
**WO 2012/028827 (08.03.2012 Gazette 2012/10)**

(54) **PROCÈDE ET DISPOSITIFS POUR INTERFACER EN TEMPS RÉEL UNE PLURALITÉ D'ÉLÉMENTS MOBILES AVEC UN SYSTEM INFORMATIQUE**

VERFAHREN UND VORRICHTUNGEN ZUR ECHTZEIT-KOPPLUNG MEHRERER BEWEGLICHER ELEMENTE MIT EINEM COMPUTERSYSTEM

METHOD AND DEVICES FOR INTERFACING IN REAL TIME A PLURALITY OF MOBILE ELEMENTS WITH A COMPUTING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2010 FR 1057014**

(43) Date de publication de la demande:
**10.07.2013 Bulletin 2013/28**

(73) Titulaire: **Starbreeze Paris**
**75008 Paris (FR)**

(72) Inventeurs:
• **LEFEVRE, Valentin**
  **F-92800 Puteaux (FR)**
• **DUTEIL, Christophe**
  **F-75014 Paris (FR)**

(74) Mandataire: **Santarelli**
**49, avenue des Champs-Elysées**
**75008 Paris (FR)**

(56) Documents cités:
**FR-A1- 2 860 985       GB-A- 2 314 415**
**US-A1- 2004 169 594     US-A1- 2007 015 588**
**US-A1- 2008 238 885     US-A1- 2008 261 693**

• **GIARRE L ET AL: "Medium access in WiFi networks: strategies of selfish nodes [Applications Corner]", IEEE SIGNAL PROCESSING MAGAZINE, IEEE SERVICE CENTER, PISCATAWAY, NJ, US, vol. 26, no. 5, 1 septembre 2009 (2009-09-01), pages 124-128, XP011276082, ISSN: 1053-5888, DOI: 10.1109/MSP.2009.933378**

EP 2 612 226 B1

## Description

La présente invention concerne les interfaces entre un utilisateur et un système informatique, notamment dans le domaine des jeux, et plus particulièrement un procédé et des dispositifs pour interfacer une pluralité d'éléments mobiles avec un système informatique.

Dans de nombreuses situations, il peut être nécessaire, pour un système informatique, de détecter la position et/ou l'orientation d'éléments mobiles pour permettre à ce dernier de réagir en conséquence. Ainsi, par exemple, dans un jeu d'échec permettant à un utilisateur de jouer contre un joueur virtuel simulé par le système informatique, l'application mise en oeuvre sur le système informatique doit connaître la position de toutes les pièces de l'échiquier, notamment celles déplacées par l'utilisateur, pour calculer son coup.

Il existe des solutions pour détecter la position et/ou l'orientation d'objets réels sur un plateau de jeu permettant d'utiliser ces objets comme interface d'un système informatique.

Ainsi, par exemple, des écrans tactiles de type résistif peuvent être utilisés comme plateau de jeu afin de détecter la position d'un objet tel qu'un stylet lorsqu'une pression suffisante est appliquée. Cependant, ce type d'écran ne supporte en général qu'un seul contact et nécessite une pression constante de l'utilisateur pour connaître la position. En d'autres termes, il n'est pas possible de détecter la position du stylet si la pression exercée par ce dernier est relâchée.

Il est également possible d'utiliser des écrans tactiles de type capacitif, basés sur le principe d'une fuite de courant via un corps conducteur. Cependant, seuls des objets conducteurs et reliés à une masse permettent la détection de leur position. Ainsi, par exemple, les positions d'objets en plastique ou en bois ne peuvent être déterminées à l'aide de tels écrans.

Par ailleurs, de façon générale, les solutions à base d'écran tactile, ou de film tactile, ne supportent qu'un nombre limité de contacts simultanés ou quasi-simultanés et ne permettent pas la détermination d'un nombre important d'objets.

D'autres solutions mettent en oeuvre des technologies à base d'infrarouge, notamment sous forme de tables. Ainsi, par exemple, les produits connus sous les noms de Surface (Surface est une marque de Microsoft), de mTouch (mTouch est une marque de Merel Technologies) et d'Entertaible (Entertaible est une marque de Philips) utilisent des caméras infrarouges disposées dans l'épaisseur de la table. Cependant, l'épaisseur imposée de ces tables les rend encombrantes, peu mobiles et leur confère une certaine rigidité. En outre, leur prix ne permet pas réellement un usage familial.

Enfin ces solutions ne permettent pas de détecter l'altitude, par rapport à une référence prédéterminée, des éléments mobiles dont les mouvements et/ou orientations sont détectés.

La solution divulguée dans la demande de brevet US 2008/238885 permet la détection de la position d'éléments mobiles sur une surface. Cependant, cette solution utilise une activation séquentielle des modules de localisation inclus dans chacun des éléments mobiles, rendant la détection de position des éléments mobiles lente.

L'invention permet de résoudre au moins un des problèmes exposés précédemment.

L'invention a ainsi pour objet un procédé pour interfacer en temps réel une pluralité d'éléments mobiles avec un système informatique, le procédé étant défini dans les revendications 1 à 13. L'invention a également pour objet un élément mobile, tel que défini dans les revendications 14 et 15. L'invention a également pour objet un dispositif, tel que défini par la revendication 16. D'autres avantages, buts et caractéristiques de la présente invention ressortent de la description détaillée qui suit, faite à titre d'exemple non limitatif, au regard des dessins annexés dans lesquels :

- la figure 1 illustre schématiquement un exemple d'architecture mettant en oeuvre de l'invention ;
- la figure 2 illustre un exemple de surface de détection et de logique associée, conformément à l'invention, selon un premier mode de réalisation ;
- la figure 3 illustre schématiquement le principe physique de couplage inductif entre un solénoïde et une boucle conductrice d'une surface de détection ;
- la figure 4 illustre schématiquement un mécanisme d'interpolation permettant de calculer la position d'un solénoïde placé sur une surface de détection, selon un axe donné, à partir des mesures obtenues par un système tel que celui décrit en référence à la figure 2
- les figures 5 et 6 illustrent un exemple de surface de détection et de logique associée, conformément à l'invention, selon un deuxième et un troisième modes de réalisation, respectivement ;
- la figure 7 illustre schématiquement des blocs logiques d'un module de localisation d'un élément mobile dont la position et/ou l'orientation peuvent être déterminées à partir d'un système tel que ceux illustrés sur les figures 2, 5 et 6 ;
- la figure 8 illustre un exemple d'implémentation électronique du schéma logique décrit en référence à la figure 7 relatif à un module de localisation d'un élément mobile dont la position et/ou l'orientation peuvent être déterminées ;
- la figure 9, comprenant les figures 9a et 9b, illustre schématiquement deux exemples d'éléments mobiles dont la position peut être déterminée et dont la position et l'orientation peuvent être déterminées, respectivement ;
- les figures 10 et 11 illustrent des exemples d'algorithmes pouvant être utilisés pour activer séquentiellement un ensemble de modules de localisation et calculer les positions et/ou orientations des éléments mobiles correspondants ;
- la figure 12 illustre un exemple de chronogramme d'activation de modules de localisation en fonction d'un signal d'activation commun ;

- la figure 13, comprenant les figures 13a et 13b, illustre un troisième exemple d'algorithme pouvant être utilisé pour activer séquentiellement un ensemble de modules de localisation à l'aide d'un signal d'activation commun ; et,

- la figure 14 représente un chronogramme d'un système d'activation dynamique de modules de localisation.

De façon générale, l'invention a pour objet de déterminer la position (abscisse, ordonnée et/ou altitude) et/ou l'orientation (cap, tangage et/ou roulis) d'éléments mobiles ou de pièces disposés sur une surface et utilisés conjointement. A ces fins, l'invention met en oeuvre une surface de détection d'éléments mobiles, des éléments mobiles pourvus chacun d'au moins un module de localisation et un module d'activation permettant de déterminer la position et, de préférence, l'orientation, de chaque élément mobile, de façon séquentielle. La position peut être une position bidimensionnelle, dans un plan, ou une position tridimensionnelle comprenant une altitude (ou élévation). L'invention vise ainsi une nouvelle interface entre un utilisateur et un système informatique liée à la position et l'orientation de plusieurs éléments mobiles. La surface de détection peut être combinée à un écran pour fournir, par exemple, des éléments de décor ou des informations.

A titre d'illustration, la captation des positions tridimensionnelles d'éléments mobiles peut s'effectuer par champ électromagnétique. A ces fins, une surface de détection de positions des éléments mobiles, composée d'un maillage de type ligne/colonne de captation électromagnétique, est utilisée. Elle est associée à un module électronique capable de calculer, par démultiplexage, la position d'un module de localisation émettant un champ électromagnétique.

Chaque module de localisation est donc sélectionné de façon séquentielle, par exemple selon un identifiant qui lui est propre, afin qu'il émette un champ électromagnétique. A ces fins, chaque module de localisation comprend un mécanisme d'activation de telle sorte que, lorsqu'il est activé, il émette un champ électromagnétique pouvant être capté par la surface de détection.

Un module de pilotage de détection de position est associé à la surface de détection afin d'activer séquentiellement les émissions électromagnétiques des modules de localisation via un signal de commande ou contrôler une telle activation séquentielle. Le signal de commande entre ce module et les modules de localisation peut être transmis via une connexion filaire ou, de préférence, via des connexions sans fil, par exemple un signal radio HF (sigle de Haute Fréquence) ou un signal conforme aux standards Wi-Fi, ZigBee ou Bluetooth (Wi-Fi, ZigBee et Bluetooth sont des marques).

La surface de détection des positions est, par exemple, une carte de type PCB (sigle de *Printed Circuit Board* en terminologie anglo-saxonne) de réception électromagnétique, souple ou rigide. Elle peut être associée à un écran, également souple ou rigide, tactile ou non tactile, par exemple un écran de type LCD (sigle de *Liquid Crystal Display* en terminologie anglo-saxonne) ou OLED (acronyme *d'Organic Light-Emitting Diode* en terminologie anglo-saxonne) permettant de faire évoluer les éléments mobiles sur une surface visuelle interactive. La surface de détection peut également être associée à une surface aimantée permettant de faire évoluer les éléments mobiles sur un plan incliné, vertical ou inversé (tête en bas) ou soumis à des chocs, sans altérer la détection de position.

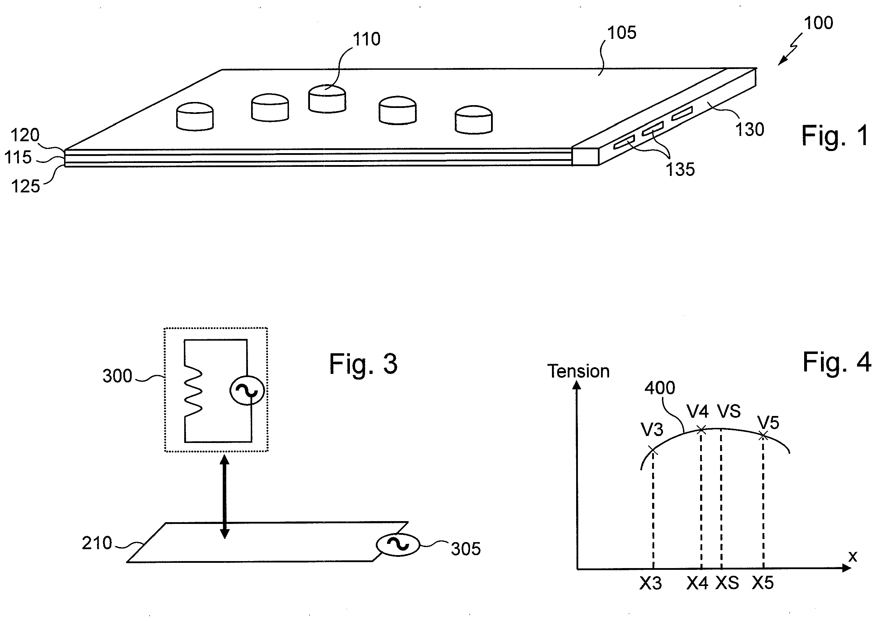

La figure 1 illustre schématiquement un exemple d'architecture 100 mettant en oeuvre de l'invention.

L'architecture 100 comprend ici un plateau 105, par exemple un plateau de jeu, sur lequel sont disposés des éléments mobiles 110 permettant à un utilisateur d'interagir avec un système informatique associé à ce plateau en déplaçant les éléments mobiles 110. Bien que seulement cinq éléments mobiles soient ici représentés, il est possible d'en utiliser plusieurs dizaines, voir plusieurs centaines. Le plateau 105 définit la zone de détection de position et/ou d'orientation des éléments mobiles mis en oeuvre.

Le plateau 105 comprend ici une surface de détection 115 couplée à un écran 120 et une surface aimantée 125 (la surface de détection 115, l'écran 120 et la surface aimantée 125 sont ici sensiblement parallèles). Il comprend également un module matériel 130 (ou système de traitement central) pour détecter la position et, si nécessaire, l'orientation des éléments mobiles 110 ainsi que pour mettre en oeuvre une ou plusieurs applications avec lesquelles interagit l'utilisateur. Le module matériel 130 est notamment en charge de gérer les détections des positions et/ou orientations des éléments mobiles, c'est-à-dire identifier les modules de localisation les uns à la suite des autres, les activer pour qu'ils émettent, chacun leur tour, un champ électromagnétique et évaluer leurs positions.

Le module matériel 130 est, de préférence, inséré dans une coque avec les autres éléments du plateau 105. Alternativement, il peut s'agir d'un module déporté intégré, par exemple, à un ordinateur ou une console de jeu. Il peut être alimenté électriquement par batterie rechargeable ou via un adaptateur secteur et présente un ensemble de connexions classiques 135, par exemple une prise électrique pour adaptateur secteur, des ports USB, Ethernet, vidéo VGA (sigle de *Video Graphics Array* en terminologie anglo-saxonne) et/ou HDMI (sigle de *High Definition Multimedia In* en terminologie anglo-saxonne), le cas échéant, notamment si un écran est associé à la zone de détection. Il comprend en outre, de préférence, un module de communication sans fil, par exemple un module de communication sans fil de type WIFI ou Bluetooth permettant d'interagir avec un autre système informatique et/ou d'accéder à des données via un réseau de communication.

Le module matériel 130 comprend typiquement un module de calcul et un module de pilotage de détection et de capture de position détaillé ci-après. Le module de calcul est ici pourvu d'une unité centrale de traitement (CPU, sigle de *Central Processing Unit* en terminologie anglo-saxonne), une unité de traitement graphique (GPU, sigle de Graphic Processing Unit en terminologie anglo-saxonne), des composants mémoires (RAM, sigle de *Random Access Memory* en terminologie anglo-saxonne, ROM, sigle de *Read Only Memory* en terminologie anglo-saxonne et/ou de type Flash) pour stocker les programmes et les variables nécessaires à la mise en oeuvre de l'invention ainsi qu'un module de traitement du son, sous forme, par exemple, d'un chipset.

Le module de pilotage de détection et de capture de position active séquentiellement, de préférence par radio, chaque module de localisation dont la position doit être déterminée ou contrôle une telle activation séquentielle. Après activation, chaque module de localisation émet ici un champ électromagnétique capté par la surface de détection. Cette dernière transmet alors au module de détection et de capture de position des informations permettant de calculer la position d'un module de localisation, par exemple de type (x, y, z). Comme décrit ci-après, lorsque plusieurs modules de localisation sont associés à un même élément mobile, il est possible, à partir des positions de ces modules de localisation, de déterminer des paramètres d'orientation de cet élément mobile, par exemple sous forme d'angles. Les positions et/ou orientation de tous les éléments mobiles dont la position et/ou l'orientation doivent être déterminées sont alors transmises au module de calcul qui les utilise pour gérer l'interactivité avec l'application considérée.

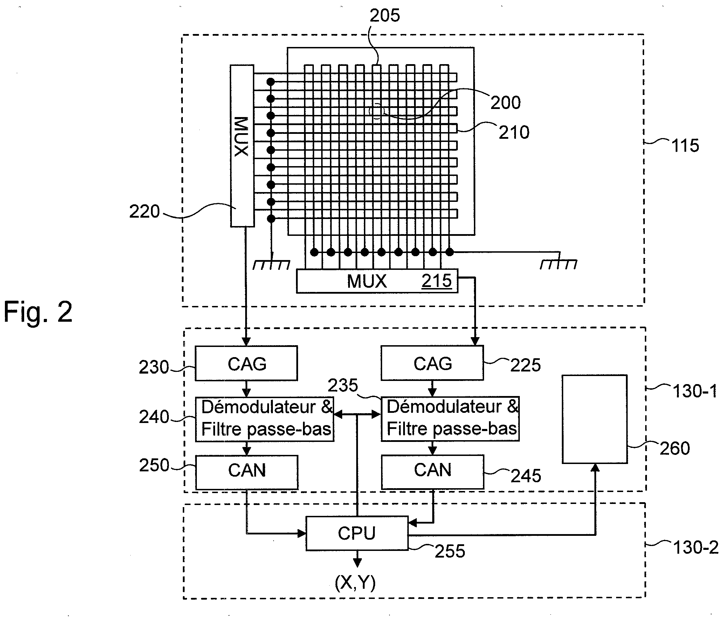

La figure 2 illustre un exemple de surface de détection et de logique associée selon un premier mode de réalisation.

La surface de détection 115 est ici constituée d'un maillage sous forme de lignes et de colonnes constituant une grille conductrice. Cette dernière comprend un ensemble de boucles conductrices suivant deux axes orthogonaux. Chaque boucle est un capteur discret permettant de mesurer l'intensité du courant ou la tension induite par un élément rayonnant, typiquement un solénoïde appartenant à un élément mobile dont la position et/ou l'orientation doivent être calculées, qui est positionné sur la surface de détection.

A titre d'illustration, il est admis ici qu'un solénoïde est placé à la position 200, c'est-à-dire à l'intersection des boucles 205 et 210 dont une extrémité est reliée à une masse et l'autre extrémité est reliée aux composants électroniques utilisés pour calculer une position. Lorsque le solénoïde situé à la position 200 est alimenté, il génère un courant inductif dans les boucles 205 et 210 qui peut être analysé et comparé au courant induit dans les autres boucles. Il est ainsi possible, par couplage inductif entre le solénoïde et la grille et par mesure du courant induit, de déterminer la position de solénoïde.

Des multiplexeurs 215 et 220 sont reliés à chaque boucle de chacun des deux axes de la grille, c'est-à-dire ici à chacune des boucles verticales et horizontales, respectivement. Les sorties des multiplexeurs 215 et 220 sont connectées aux contrôleurs automatiques de gain (CAG) 225 et 230, respectivement, du module de pilotage de détection et de capture de position, référencé ici 130-1, du module matériel 130. Les signaux de sortie des contrôleurs automatiques de gain 225 et 230 sont tout d'abord démodulés dans les démodulateurs 235 et 240, respectivement. La démodulation produit un signal continu (DC, sigle de *Direct Current* en terminologie anglo-saxonne) proportionnel à la sinusoïde originale complétée de composantes alternatives (AC, sigle d'*Alternating Current* en terminologie anglo-saxonne) multiples de la fréquence fixe émise par le solénoïde.

Selon un schéma couramment mis en oeuvre, le module de calcul, référencé ici 130-2, du module matériel 130 pilote les multiplexeurs 215 et 220 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe-bas est avantageusement mis en oeuvre dans chaque démodulateur 235 et 240 pour supprimer les harmoniques indésirables du signal démodulé ainsi que le bruit de fond électromagnétique. Ce filtrage permet d'affiner les mesures des signaux issus des contrôleurs automatiques de gain 225 et 230, après démodulation, qui sont ensuite numérisés dans les convertisseurs analogique/numérique (CAN) 245 et 250, respectivement.

Les valeurs numériques obtenues sont transmises à l'unité centrale de traitement (CPU) 255 du module de calcul 130-2 pour être mémorisées. Comme illustré, l'unité centrale de traitement 255 contrôle les démodulateurs 235 et 240.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module de pilotage de détection et de capture de position 130-1 comprend ici un émetteur radio 260, commandé par l'unité centrale de traitement 255 du module de calcul 130-2, permettant d'activer un module de localisation d'un élément mobile. A titre d'illustration, l'unité centrale de traitement 255 transmet à l'émetteur radio 260 un identifiant d'un module de localisation à activer. Cet identifiant est codé puis transmis sous forme de signal radio numérique ou analogique. Chaque module de localisation recevant ce signal peut alors comparer l'identifiant reçu avec son propre identifiant et s'activer si les identifiants sont identiques.

Ainsi, pour estimer la position d'un ensemble de module de localisation, il est nécessaire d'effectuer un cycle sur chaque module de localisation et, pour chacun de ces cycles, selon le mode de réalisation décrit ici, un cycle sur chaque ensemble de boucles.

Plusieurs surfaces de détection peuvent être combinées les unes avec les autres, la superficie de la surface de détection résultante étant la somme des superficies des surfaces de détection combinées. A ces fins, une surface de détection est considérée comme maître, les autres étant considérées comme esclaves. L'activation séquentielle des éléments mobiles est gérée par la surface de détection maître qui reçoit, de préférence, les positions calculées par les modules matériels associés à chaque surface de détection esclave et les consolide en élaborant un tableau contenant les coordonnées et angles de liberté des modules de localisation.

La figure 3 illustre schématiquement le principe physique de couplage inductif entre un solénoïde et une boucle conductrice d'une surface de détection.

Conformément à l'invention, chaque élément mobile dont la position et/ou l'orientation doivent être calculées comprend au moins un solénoïde dont l'axe est, de préférence, orientée vers la surface de détection.

Le solénoïde 300 est parcouru par un courant alternatif et émet un champ électromagnétique qui se propage vers la surface de détection, notamment, dans cet exemple, vers la boucle 210. La boucle 210, recevant un champ électromagnétique issu du solénoïde 300, se couple avec le solénoïde 300. Il est alors possible de mesurer un signal alternatif aux bornes de cette boucle, référencées 305.

Le couplage entre le solénoïde 300 et la boucle 210 peut s'exprimer sous la forme de la relation suivante,

$$R = \frac{k}{D^2} E$$

où

E désigne la tension aux bornes du solénoïde 300, R désigne la tension du signal reçu aux bornes 305 de la boucle de réception 210, D est la distance entre le solénoïde 300 et la boucle de réception 210 et k est une constante liée à des facteurs intrinsèques du système comprenant le solénoïde et la boucle de réception, notamment le nombre de spires du solénoïde et la taille de la boucle.

La figure 4 illustre schématiquement un mécanisme d'interpolation permettant de calculer la position d'un solénoïde placé sur une surface de détection, selon un axe donné, à partir de mesures obtenues par un système tel que celui décrit en référence à la figure 2.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement à partir d'un identifiant de la boucle correspondante (ces valeurs sont prédéfinies selon le schéma de routage de la surface de détection et, de préférence, mémorisées dans une mémoire non volatile).

La portion de courbe 400 représentée sur la figure 4 illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice.

Les relations suivantes illustrent cette propriété.

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante,

$$X4 - X3 = X5 - X4 = \Delta X$$

$$X5 - X3 = 2\Delta X$$

($\Delta X$ représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante,

$$D = \sqrt{\frac{k}{R}}E$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

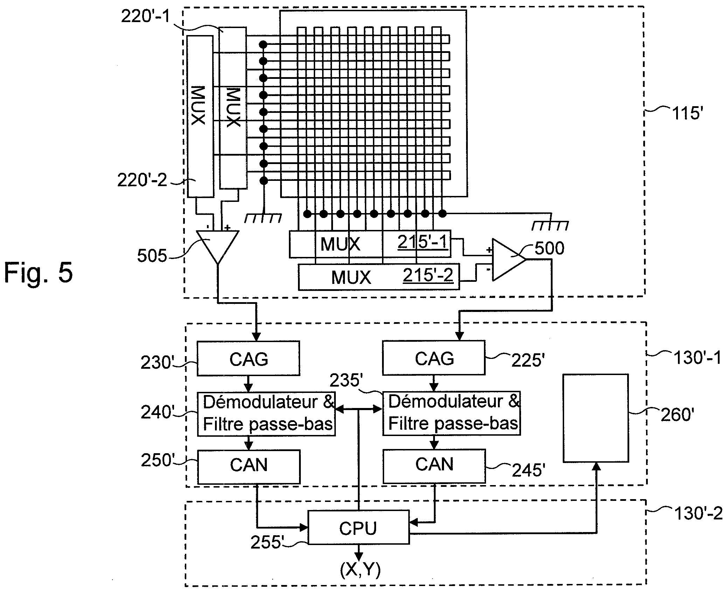

La figure 5 illustre un exemple de surface de détection et de logique associée selon un deuxième mode de réalisation.

Une différence essentielle entre la surface de détection et la logique associée représentées sur les figures 2 et 5 réside dans l'utilisation de multiplexeurs additionnels et d'amplificateurs différentiels.

Comme la surface de détection 115 décrite précédemment, la surface de détection 115' est ici constituée d'un maillage sous forme de lignes et de colonnes constituant une grille conductrice comprenant un ensemble de boucles suivant deux axes orthogonaux. De même, chaque boucle est un capteur discret permettant de mesurer l'intensité du courant ou la tension induite par un solénoïde (appartenant à un élément mobile dont la position et/ou l'orientation doivent être détectées) qui est positionné sur la surface de détection.

Deux multiplexeurs sont ici associés à chaque ensemble (vertical et horizontal) de boucles. Ainsi, pour chacune des deux dimensions de la grille, un premier multiplexeur est connecté alternativement à une boucle sur deux tandis qu'un second multiplexeur est connecté aux boucles restantes. Le multiplexeur 215'-1 est ici connecté aux boucles verticales impaires tandis que le multiplexeur 215'-2 est connecté aux boucles verticales paires. De même, le multiplexeur 220'-1 est ici connecté aux boucles horizontales impaires tandis que le multiplexeur 220'-2 est connecté aux boucles horizontales paires.

Les sorties des multiplexeurs 215'-1 et 215'-2, connectées aux boucles verticales, sont reliées à un amplificateur différentiel 500 tandis que les sorties des multiplexeurs 220'-1 et 220'-2, connectées aux boucles horizontales, sont reliées à un amplificateur différentiel 505.

Les multiplexeurs et les amplificateurs différentiels produisent donc, pour chaque axe de la grille de la surface de détection, une comparaison immédiate entre les signaux reçus par deux boucles adjacentes. En d'autres termes, le signal de sortie de chaque amplificateur différentiel est un signal différentiel.

Un traitement similaire à celui décrit en référence à la figure 2 est ensuite appliqué aux signaux différentiels. Cependant, le filtrage est ici un filtrage adaptatif (et non un filtrage passe-bas) afin de supprimer le bruit commun et le bruit lié à la démodulation et, ainsi, augmenter le rapport signal sur bruit. Ce mode de réalisation permet une plus grande amplification et, par conséquent, une meilleure précision dans le calcul des positions. L'unité centrale du module de calcul contrôle le filtre adaptatif afin que celui soit, de préférence, remis à zéro après la fin de chaque cycle de mesures.

La sortie de chaque amplificateur différentiel 500 et 505 est reliée à un contrôleur automatique de gain (CAG) 225' et 230', respectivement, du module de pilotage de détection et de capture de position, référencé ici 130'-1. Les signaux de sortie des contrôleurs automatiques de gain 225 et 230 sont tout d'abord démodulés dans les démodulateurs 235' et 240', respectivement, pour obtenir un signal continu proportionnel à la sinusoïde originale complétée de composantes alternatives multiples de la fréquence fixe émise par le solénoïde.

A nouveau, le module de calcul, référencé ici 130'-2, pilote les multiplexeurs 215'-1, 215'-2, 220'-1 et 220'-2 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Comme indiqué précédemment, un filtre adaptatif est avantageusement mis en oeuvre dans chaque démodulateur 235' et 240' pour supprimer les harmoniques indésirables du signal démodulé ainsi que le bruit de fond électromagnétique. Ce filtrage permet d'affiner les mesures des signaux issus des contrôleurs automatiques de gain 225' et 230', après démodulation, qui sont ensuite numérisés dans les convertisseurs analogique/numérique 245' et 250', respectivement.

Les valeurs numériques obtenues sont transmises à l'unité centrale de traitement 255' du module de calcul 130'-2 pour être mémorisées. Comme illustré, l'unité centrale de traitement 255' contrôle les démodulateurs 235' et 240'.

A nouveau, après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-avant.

La mise à la masse des boucles peut ici aussi être assurée par des bandes de métal positionnées entre les différentes boucles afin de les protéger des interférences électromagnétiques, une alternative consistant à disposer un plan de masse uniforme sous la grille conductrice.

Comme le module de pilotage de détection et de capture de position 130-1 décrit en référence à la figure 2, le module de pilotage de détection et de capture de position 130'-1 comprend ici un émetteur radio 260', commandé par l'unité centrale de traitement 255' du module de calcul 130'-2, permettant d'activer un module de localisation.

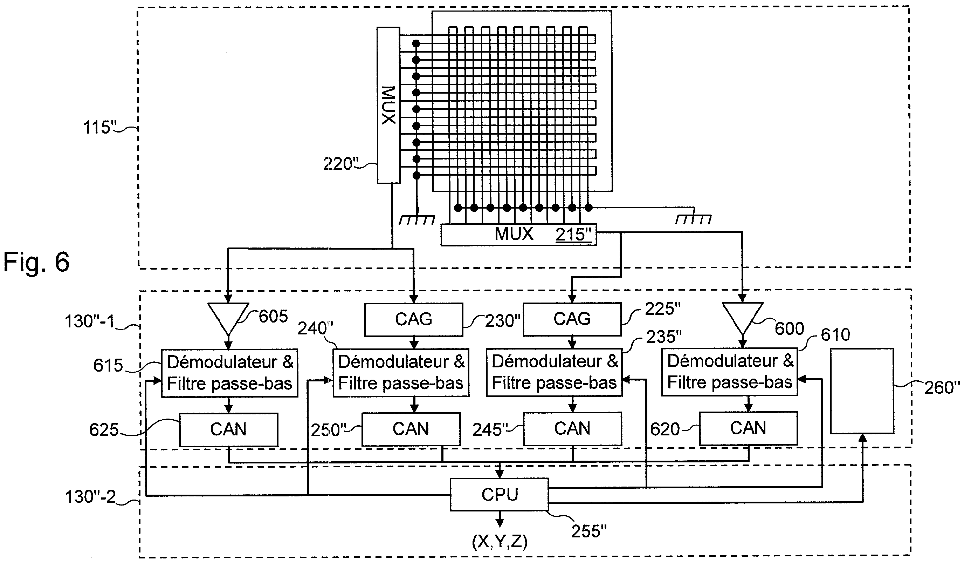

La figure 6 illustre un exemple de surface de détection et de logique associée selon un troisième mode de réalisation.

Ce mode de réalisation se fonde sur celui décrit en référence à la figure 2. Il comprend en outre deux amplificateurs à gain fixe, deux chaînes de démodulation avec filtrage passe-bas et conversion analogique/numérique par axe de la grille conductrice. Ce mode de réalisation permet un calcul fin de l'altitude des éléments mobiles situés au dessus du plateau de détection.

Il est observé ici que le calcul d'altitude impose l'utilisation de données de positions absolues (et non relatives comme cela est possible pour les positions selon les axes des abscisses et ordonnées).

A ces fins, une seconde chaîne de capture de position est mise en place où le contrôleur automatique de gain est remplacé par un amplificateur à gain constant. La perte de précision induite par la suppression du contrôleur automatique de gain est remplacée par la capacité de l'amplificateur à gain constant à fournir des mesures absolues.

La surface de détection 115" est à nouveau constituée d'un maillage sous forme de lignes et de colonnes constituant une grille conductrice comprenant un ensemble de boucles suivant deux axes orthogonaux, chaque boucle formant un capteur discret permettant de mesurer l'intensité du courant ou la tension induite par un solénoïde (appartenant à un élément mobile dont la position et/ou l'orientation doit être détecté) qui est positionné sur la surface de détection.

Des multiplexeurs 215" et 220" sont reliés à chaque boucle de chacun des deux axes de la grille, c'est-à-dire ici à chacune des boucles verticales et horizontales, respectivement. Les sorties des multiplexeurs 215 et 220 sont connectées aux contrôleurs automatiques de gain (CAG) 225" et 230" ainsi qu'aux amplificateurs à gain fixe 600 et 605, respectivement, du module de pilotage de détection et de capture de position, référencé ici 130"-1.

Les signaux de sortie des contrôleurs automatiques de gain 225" et 230" sont tout d'abord démodulés dans les démodulateurs 235" et 240", respectivement.

La démodulation produit un signal continu proportionnel à la sinusoïde originale complétée de composantes alternatives multiples de la fréquence fixe émise par le solénoïde.

De même, les signaux de sorties des amplificateurs à gain fixe 600 et 605 sont tout d'abord démodulés dans les démodulateurs 610 et 615, respectivement.

A nouveau, le module de calcul, référencé ici 130"-2 pilote les multiplexeurs 215" et 220" afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe-bas est avantageusement mis en oeuvre dans chaque démodulateur 235", 240", 610 et 615 pour supprimer les harmoniques indésirables du signal démodulé ainsi que le bruit de fond électromagnétique. Ce filtrage permet notamment d'affiner les mesures des signaux issus des contrôleurs automatiques de gain 225" et 230", après démodulation.

Les signaux de sortie des démodulateurs 235", 240", 610 et 615 sont ensuite numérisés dans les convertisseurs analogique/numérique (CAN) 245", 250", 620 et 625, respectivement.

Les valeurs numériques obtenues sont transmises à l'unité centrale de traitement 255" du module de calcul 130"-2 pour être mémorisées. Comme illustré, l'unité centrale de traitement 255" contrôle les démodulateurs 235", 240", 610 et 615.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-avant.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module de pilotage de détection et de capture de position 130"-1 comprend ici un émetteur radio 260", commandé par l'unité centrale de traitement 255" du module de calcul 130"-2, permettant d'activer un module de localisation.

Les éléments mobiles dont la position et/ou l'orientation doivent être déterminées contiennent au moins un module de localisation intégrant un récepteur d'activation, de préférence sans fil, par exemple un module de communication radio HF, Wi-Fi, ZigBee ou Bluetooth, permettant de recevoir une commande d'activation de leurs émissions électromagnétiques. Chaque module de localisation est capable de déterminer si la commande d'activation reçue, émise par un module de pilotage de détection et de capture de position, lui est adressée ou non. Une information d'identification du module de localisation à activer peut être transmise sous forme analogique ou numérique.

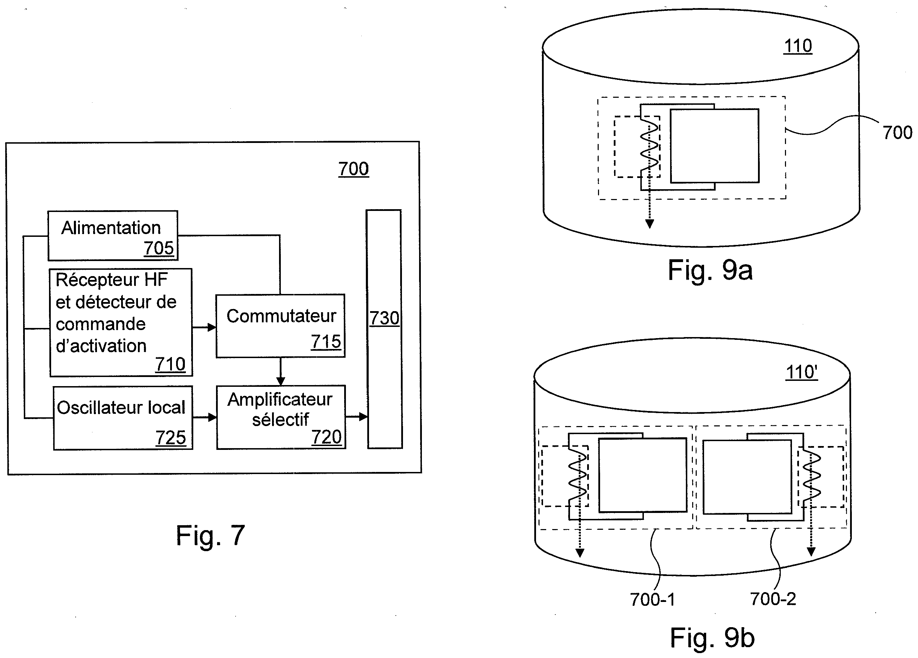

La figure 7 illustre schématiquement des blocs logiques d'un module de localisation d'un élément mobile dont la position et/ou l'orientation peuvent être déterminées à partir d'un système tel que celui décrit précédemment.

Un tel élément mobile est, de préférence, autonome tant en ce qui concerne son alimentation électrique que la réception de signaux de commande d'émission électromagnétique.

Le module de localisation 700 comprend ainsi un module d'alimentation électrique 705 fournissant une tension pour l'ensemble des composants du module de localisation ainsi qu'un module de réception et détection de commande 710 qui reçoit et démodule un signal, par exemple un signal HF, émis par un module externe de pilotage de détection et de capture de position, pour déterminer si le signal reçu vise l'activation de ce module de localisation. Comme décrit précédemment, une telle détection peut être réalisée par la comparaison d'un identifiant reçu avec un identifiant préalablement mémorisé.

Le module de localisation 700 comprend un outre un commutateur 715, commandé par le module de réception et détection de commande 710, ainsi qu'un amplificateur sélectif 720 commandé par le commutateur 715. Enfin, le module de localisation 700 comprend un oscillateur local 725 générant une fréquence, de préférence, fixe, stable et de type carré et un solénoïde 730.

L'amplificateur sélectif 720 génère, selon la position du commutateur 715 et à partir du signal issu de l'oscillateur local 725, une tension sinusoïdale aux bornes du solénoïde 730, permettant au solénoïde 730 de générer quasi instantanément (c'est-à-dire en temps réel) une puissance de rayonnement suffisante. Les temps d'établissement quasi instantané de l'oscillation de l'amplificateur sélectif et de coupure sont obtenus par le couple formé de l'oscillateur local 725 et de l'amplificateur sélectif 720.

A ces fins, l'oscillateur local 725 et l'amplificateur sélectif 720 sont, selon un premier mode de réalisation, toujours actifs lorsque le module de localisation est alimenté (ils ne sont pas arrêtés en fonction de l'activation du module de localisation). Le commutateur 715 est alors utilisé pour acheminer ou non le signal de l'oscillateur local 725 vers l'entrée de l'amplificateur sélectif 720. Ainsi, lorsque l'oscillateur local 725 est commuté sur l'amplificateur sélectif 720, l'amplificateur sélectif 720 atteint sa fréquence d'oscillation propre en un temps très court, typiquement quelques microsecondes (un oscillateur standard de type RLC entretenu nécessite un temps d'établissement de quelques millisecondes, incompatible avec le temps réel). La coupure de l'amplificateur sélectif 720, consistant à déconnecter l'oscillateur local 725 de l'amplificateur sélectif 720, est, pour les mêmes raisons, quasi instantanée (de l'ordre de la microseconde).

Selon un autre mode de réalisation, l'oscillateur local 725 est toujours actif lorsque le module de localisation est alimenté (il n'est pas arrêté en fonction de l'activation du module de localisation) alors que l'amplificateur sélectif 720 n'est alimenté que lorsque le module de localisation est activé. Le commutateur 715 a alors pour objet de contrôler l'alimentation électrique de l'amplificateur sélectif 720. Les temps d'établissement de l'amplificateur sélectif et de coupure sont similaires à ceux du premier mode de réalisation.

Plusieurs types d'alimentation électrique du module de localisation peuvent être utilisés. L'alimentation peut être obtenue à partir d'une batterie rechargeable et un circuit de contrôle standard. Elle peut également être obtenue à partir d'une batterie et d'un régulateur de tension permettant d'obtenir une tension constante durant toute une plage d'utilisation de la batterie. Cette solution est particulièrement avantageuse lorsque le système doit calculer l'altitude d'éléments mobiles mis en oeuvre.

L'alimentation peut également être fournie de façon indirecte, par télé-alimentation. Selon ce mode de réalisation, une couche de solénoïdes rayonnants dédiés est placée sous la surface de détection. Ces solénoïdes sont parcourus par un signal sinusoïdal et la puissance émise par chaque solénoïde est suffisante pour télé-alimenter les modules de localisation positionnés au dessus de lui. Les modules de localisation sont également équipés d'un solénoïde pour la réception, par induction, du signal émis par les solénoïdes présents sous la surface de détection.

La télé-alimentation peut également être couplée avec l'utilisation d'un condensateur de forte capacité qui est chargé à partir du solénoïde du module de localisation. Le condensateur est alors utilisé comme source de tension pour alimenter les autres modules. Alternativement, la télé-alimentation peut être couplée avec l'utilisation d'une batterie présente dans l'élément mobile, par exemple une batterie au lithium. Le solénoïde du module de localisation recharge alors constamment cette batterie dès qu'il est parcouru par un courant induit. Un circuit de protection de charge/décharge est avantageusement associé à la batterie pour qu'elle reste dans sa plage de tensions acceptables. Comme indiqué précédemment, si l'altitude d'éléments mobiles doit être évaluée, la source de tension est, de préférence, régulée pour que la tension d'alimentation soit constante durant une durée d'utilisation de cette source de tension, c'est-à-dire durant une estimation de position et/ou d'orientation de l'élément mobile.

Les éléments mobiles situés sur une surface de détection et utilisés conjointement peuvent utilisés des types d'alimentation différents.

Par ailleurs, lorsqu'un élément mobile comprend plus d'un module de localisation, certains composants, notamment l'alimentation électrique, peuvent être communs à certains ou à tous les modules de localisation.

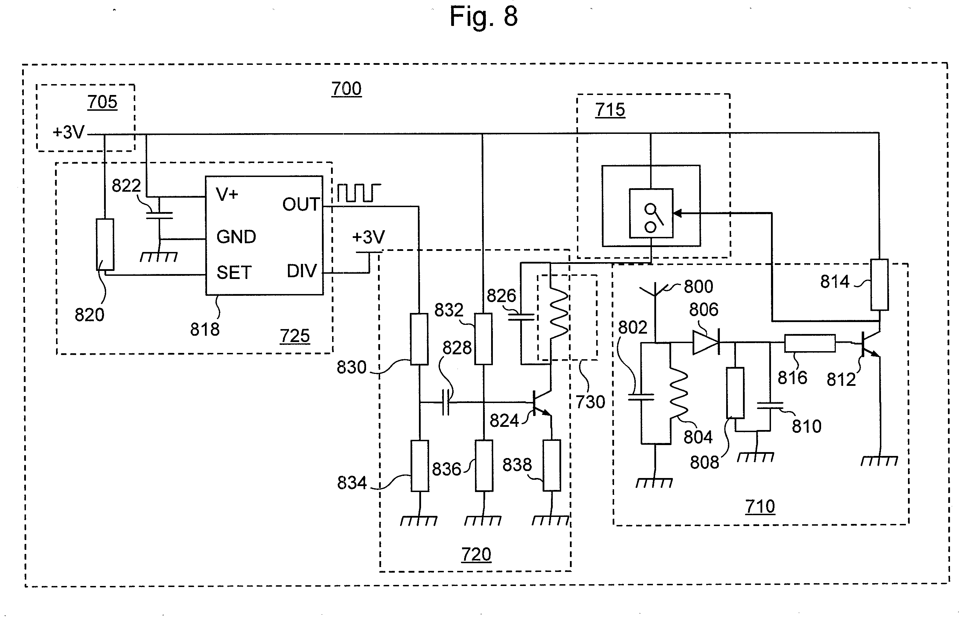

La figure 8 illustre un exemple d'implémentation électronique du schéma logique décrit en référence à la figure 7, relatif à un module de localisation d'un élément mobile dont la position et/ou l'orientation peuvent être déterminées.

Le schéma électronique illustré sur la figure 8 vise un mode analogique avec transmission de N porteuses par le module de pilotage de détection et de capture de position, N représentant le nombre maximal de modules de localisation dont les positions peuvent être calculées par le système.

Le module de réception et détection de commande 710 a ici pour objet de détecter la fréquence de la porteuse associée au module de localisation considéré. Il comprend, dans cet exemple d'implémentation, une antenne de réception 800 et un réseau LC, comprenant une capacité 802 et une inductance 804, accordé sur la fréquence d'émission du module de pilotage de détection et de capture de position. Il comprend également une diode 806 chargée de supprimer la composante négative du signal ainsi qu'un filtre RC passe-bas, comprenant une résistance 808 et une capacité 810, en charge de supprimer la porteuse. Si la porteuse est présente, un signal est présent en sortie du filtre tandis que si la porteuse ne correspond pas au module de localisation considéré, le signal est nul en sortie du filtre. Le module de réception et détection de commande 710 comprend en outre un transistor de commutation 812, commandant le commutateur 715 via une résistance 814 qui permet d'activer l'amplificateur sélectif 720. Le transistor de commutation 812 est ici relié au circuit RC via une résistance 816.

Une telle implémentation vise une réception de signal d'activation en modulation d'amplitude. Cependant, d'autres modes tels qu'une réception en modulation de fréquence ou une réception en modulation de phase peuvent être mis en oeuvre.

Le commutateur utilisé est, par exemple, un commutateur HC 4066 de la société Texas Instrument. Il permet d'activer ou de désactiver l'amplificateur sélectif quasi instantanément (temps réel). L'activation est réalisée lorsque le commutateur est passant, c'est-à-dire lorsque l'amplificateur sélectif est relié à l'alimentation.

Comme décrit précédemment, l'oscillateur local 725 génère, de préférence, un signal carré dont la fréquence est compatible avec les boucles conductrices de la surface de détection (ces boucles étant dimensionnées pour recevoir une fréquence spécifique). Il comprend ici un oscillateur 818, par exemple un oscillateur LTC 1799 de la société Linear Technology, couplé à une résistance 820 ayant ici une valeur de 4kOhms pour définir une fréquence d'oscillation de 250 KHz compatible avec la fréquence détectées par les boucles de la surface de détection.

L'amplificateur sélectif 720 permet de convertir le signal carré généré par l'oscillateur local 725 en un signal sinusoïdal. Il assure par ailleurs un gain optimal à la fréquence de l'oscillateur local et permet d'obtenir l'intensité requise du signal sinusoïdal parcourant le solénoïde 730 et donc le rayonnement électromagnétique optimal vers la surface de détection utilisée.

L'amplificateur sélectif est ici réalisé à partir d'un transistor de commutation 824, des capacités 826 et 828 ainsi que du réseau de résistances 830 à 838. La capacité 828 a, par exemple, pour valeur 33$\mu$F tandis que la résistance 830 a pour valeur 2kOhms, les résistances 832, 834, 836 et 838 1kOhms et la résistance 838 100kOhms. Ainsi, les temps d'établissement et de coupure de l'amplificateur sélectif 720 sont les plus courts possibles.

Le module de réception et détection de commande 710 peut être réalisé suivant d'autres variantes que celle décrite précédemment. En particulier, au delà du mode analogique avec transmission de N porteuses par le module de pilotage de détection et de capture de position, il est possible de mettre en oeuvre un mode analogique utilisant une seule porteuse contenant un signal utile pour l'activation d'un module de localisation. Selon cette variante, un signal utile dont la fréquence doit être détectée pour activer ou non un module de localisation est disponible en sortie du filtre RC passe-bas. Ce signal peut, par exemple, être filtré dans un filtre passe-bande dont la fréquence de résonance est accordée sur la fréquence d'activation spécifique du module de localisation considéré. La sortie de ce filtre passe-bande est ensuite transmise à un transistor en commutation qui active le commutateur analogique permettant l'activation de l'amplificateur sélectif.

Alternativement, un mode numérique avec transmission d'une seule porteuse contenant un signal utile numérique pour l'activation d'un module de localisation peut être utilisé. Selon cette variante, un signal utile est disponible en sortie du filtre RC passe-bas. Ce signal est typiquement un signal carré contenant une information numérique codée sur plusieurs bits permettant l'activation d'une pluralité de modules de localisation. Chaque module de localisation est équipé d'un microcontrôleur qui décode ce signal et, en fonction de la valeur encodée et d'une valeur prédéterminée, active le commutateur analogique et donc l'amplificateur sélectif.

D'autres protocoles de communication tels que Wi-Fi, ZigBee ou Bluetooth peuvent être utilisés pour transmettre une commande d'activation.

Le couple formé d'un oscillateur local et d'un amplificateur sélectif procure certains avantages. En particulier, l'oscillateur local étant toujours actif, il n'est pas nécessaire de l'activer et le désactiver. En outre, l'amplificateur sélectif utilisé est l'élément qui fonctionne en commutation (il est alimenté ou non selon la position du commutateur analogique). Une telle implémentation autorise donc un temps d'activation et de désactivation très court pour l'amplificateur sélectif et permet d'optimiser les temps de commutation et donc le temps de cycle global (un cycle correspondant à l'activation/désactivation de l'ensemble des modules de localisation).

Il est cependant possible de mettre en oeuvre des variantes plus simples d'oscillateurs pouvant remplacer le couple oscillateur local et amplificateur sélectif, typiquement un montage connu sous le nom de montage de type Clapp ou Colpitts.

Comme décrit précédemment, les modules de localisation à activer peuvent être identifiés de façon analogique ou numérique. L'identification analogique d'un module de localisation peut s'effectuer par l'envoi d'une fréquence dédiée, selon plusieurs modes, en particulier selon une fréquence de porteuse spécifique pour chaque module de localisation (cette fréquence identifie le module de localisation qui est activé). L'électronique embarquée réagit donc sur la porteuse spécifique qui lui correspond. Alternativement, une fréquence unique de porteuse peut être utilisée pour tous les modules de localisation. Cette fréquence module un signal utile qui est reçu par chaque module de localisation. C'est la valeur de la fréquence modulée de ce signal utile qui permet l'identification module de localisation à détecter. Les fréquences d'activation de chaque module de localisation sont, par exemple, définies en usine lors de leur assemblage et sont configurées dans le module de pilotage de détection et de capture de position de façon logicielle.

L'identification numérique d'un module de localisation s'effectue par la transmission d'un code, typiquement sur plusieurs bits, dans un message d'activation. Ce mécanisme d'identification permet une plus grande souplesse d'utilisation car il permet la programmation (et donc la modification) de l'identification de chaque module de localisation.

La figure 9, comprenant les figures 9a et 9b, illustre schématiquement deux exemples d'éléments mobiles dont la position peut être déterminée et dont la position et l'orientation peuvent être déterminées, respectivement.

L'élément mobile 110 représenté sur la figure 9a comprend un seul module de localisation 700. Comme illustré, l'axe radial du solénoïde est avantageusement perpendiculaire au plan de la surface de détection afin que le rayonnement électromagnétique du solénoïde se propage de façon optimale vers cette surface.

La position tridimensionnelle de l'élément mobile 110, comprenant un seul solénoïde, peut être calculée conformément à l'invention, comme décrit précédemment. En effet, à partir de la position calculée du solénoïde du module de localisation 700 et connaissant la position de ce module dans l'élément mobile 110, il est possible d'en déduire la position de l'élément mobile 110, c'est-à-dire la position d'un point de référence de cet élément mobile. Lorsque plusieurs éléments mobiles sont présents sur la surface de détection, la position de chaque élément mobile est déterminée de façon séquentielle.

L'élément mobile 100' représenté sur la figure 9b comprend deux modules indépendants de localisation 700-1 et 700-2. A nouveau, comme illustré, l'axe radial des solénoïdes est avantageusement perpendiculaire au plan de la surface de détection afin que le rayonnement électromagnétique du solénoïde se propage de façon optimale vers cette surface.

Chaque solénoïde 700-1 et 700-2 de l'élément mobile 110' peut être activé indépendamment l'un de l'autre, de façon séquentielle. Ainsi, il est possible de déterminer la position de l'élément mobile 110' en déterminant la position de chaque solénoïde des modules de localisation 700-1 et 700-2 et en connaissant leur position dans l'élément mobile 110'. De même, il est possible de connaître l'orientation de cet élément mobile à partir des positions relatives des solénoïdes des modules de localisation 700-1 et 700-2 et de leur position dans l'élément mobile 110'. Il convient d'observer ici que l'utilisation des coordonnées des solénoïdes des modules de localisation 700-1 et 700-2, dans le plan de la surface de détection, permet de déterminer l'orientation de l'élément mobile 110' dans ce plan tandis que l'utilisation de l'altitude des solénoïdes des modules de localisation 700-1 et 700-2 permet de calculer le tangage de l'élément mobile 110'.

Il est noté ici que des éléments mobiles comprenant un seul solénoïde et comprenant deux solénoïdes peuvent être utilisés conjointement sur une surface de détection à condition que le module de pilotage de détection et de capture de position utilisé soit capable d'activer (directement ou non) chaque solénoïde indépendamment des autres.

La capture de l'orientation d'éléments mobiles peut donc être obtenue en dotant chaque élément mobile d'au moins deux modules de localisation (ne devant pas être alignés selon une perpendiculaire à la surface de détection) et en définissant une règle d'identification de ces modules de localisation.

Le roulis d'un élément mobile peut être déterminé en dotant ce dernier de deux modules de localisation complémentaires (quatre modules de localisation sont alors utilisés) et en complétant la règle d'identification de ces modules pour associer des identifiants de ces quatre modules de localisation à un élément mobile.

A partir des positions tridimensionnelles de quatre modules de localisation d'un élément mobile, il est possible de calculer ses six degrés de liberté.

Il est également possible, en associant trois modules de localisation à un élément mobile, formant un triangle équilatéral, de calculer approximativement ses six degrés de liberté.

L'activation séquentielle de modules de localisation, par un module de pilotage de détection et de capture de position, permet d'estimer la position et/ou l'orientation d'une pluralité d'éléments mobiles pourvus de ces modules de localisation.

Lorsqu'un module de localisation reçoit une commande d'activation qui lui est dédiée, il déclenche une émission électromagnétique. Le système de détection, connaissant l'identification du module de localisation en cours d'émission, peut alors lier les informations de position calculées à l'identifiant du module de localisation.

Le module de pilotage de détection et de capture de position est donc ici en charge d'activer séquentiellement une émission électromagnétique par module de localisation, de récupérer une à une l'ensemble des positions et, connaissant les liens entre les identifiants des modules de localisation et des identifiants d'éléments mobiles, de calculer, le cas échéant, des orientations afin d'associer des positions et/ou orientations aux identifiants d'éléments mobiles. Il construit ainsi un tableau contenant, pour chaque élément mobile, un identifiant, une abscisse, une ordonnée et, de préférence, une altitude dans un repère de la surface de détection ainsi que, le cas échéant, des valeurs de lacet, tangage et roulis.

L'activation séquentielle de l'émission électromagnétique des modules de détection permet l'utilisation d'une unique fréquence d'émission pour l'ensemble des éléments mobiles gérés par le système. Différents algorithmes d'activation peuvent être utilisés par le module de pilotage de détection et de capture de position. Il est ainsi possible d'activer systématiquement tous les modules de localisation, d'activer un sous-ensemble de modules de localisation, ce sous-ensemble étant, par exemple, défini par programmation via le module de calcul (une telle mise en oeuvre permet en particulier de réduire la durée globale de la séquence d'activation complète des pièces) ou d'activer des modules de localisation selon le contexte. Cette dernière solution permet notamment de gérer le fait que certains éléments mobiles peuvent quitter la surface de détection et que leurs positions et/ou orientation ne nécessite plus d'être calculées. Une boucle secondaire surveille cependant, de préférence, leur possible réintégration sur la surface de détection et le besoin induit de capter de nouveau leur position et/ou orientation. Ce mode permet d'optimiser la durée globale de la séquence d'activation de l'ensemble des modules de localisation devant être activés.

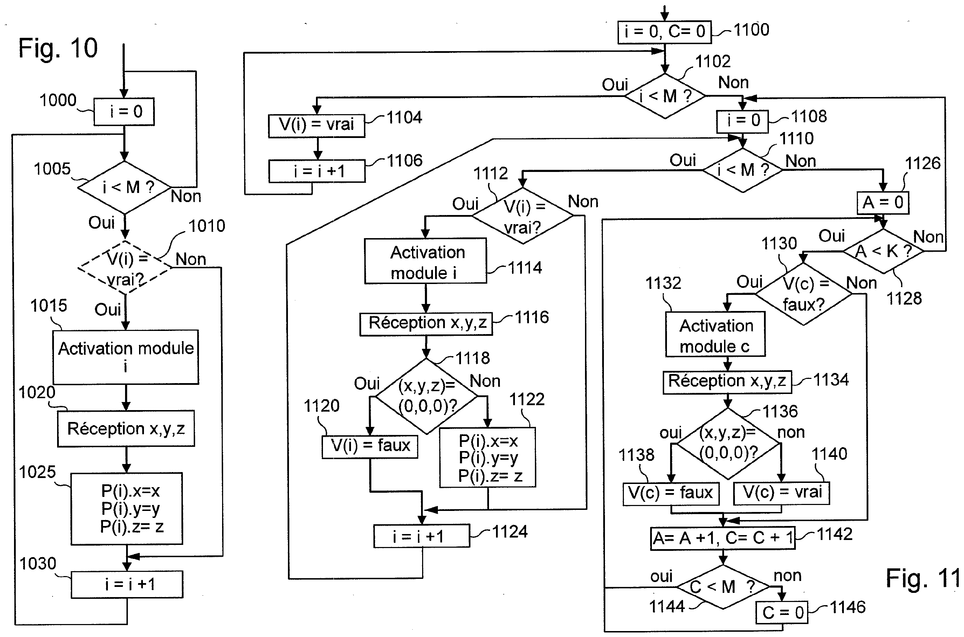

La figure 10 illustre un premier exemple d'algorithme pouvant être utilisé pour activer séquentiellement un ensemble de modules de localisation et calculer les positions et/ou orientations des éléments mobiles correspondants.

Une première étape consiste ici à initialiser une variable i, représentant un index sur des modules de localisation, à la valeur zéro (étape 1000). Dans une étape suivante (étape 1005), la valeur de la variable i est comparée à la valeur d'une constante M représentant le nombre de modules de localisation supportés par le système. Typiquement, l'ordre de grandeur de la constante M est de cent. Si la valeur de la variable i est supérieure ou égale à celle de la constante M, la variable i est réinitialisée (étape 1000).

Si, au contraire, la valeur de la variable i est inférieure à celle de la constante M, un test est effectué pour déterminer si le module de localisation ayant l'index i est utilisé (étape 1010), c'est-à-dire si le module de localisation ayant l'index i est valide. La validité des modules de localisation peut être mémorisée dans un tableau qui peut être mis à jour par une application utilisant l'interface formée par les éléments mobiles comprenant ces modules de localisation et le système de localisation de ces modules. Comme illustré par l'utilisation de trait pointillé, cette étape est optionnelle.

Si le module de localisation correspondant à l'index i est valide, ce module est activé (étape 1015). Comme décrit précédemment, l'activation du module de localisation ayant l'index i consiste, par exemple, à émettre un signal dont la porteuse a une fréquence caractérisant un identifiant de ce module de localisation.

Lorsque le module de localisation ayant l'index i est activé, il émet un champ électromagnétique permettant sa localisation par mesure de tensions induites dans des boucles de la surface de détection comme indiqué précédemment.

Le module de pilotage de détection et de capture de position est alors en mesure de calculer la position du module de localisation activé (étape 1020).

Ces informations sont mémorisées pour être exploitées par le module de calcul (étape 1025). Elles peuvent notamment être mémorisées dans un tableau de position des modules de localisation à partir duquel peuvent être estimées les positions et/ou orientations des éléments mobiles comprenant ces modules de localisation.

La variable i est alors incrémentée de un (étape 1030) et les étapes précédentes sont répétées (étapes 1005 à 1030) jusqu'à ce que les positions de tous les modules de localisation (ou modules valides de localisation) aient été déterminées.

De même, si le module de localisation correspondant à l'index i n'est pas valide (étape 1010), la variable i est incrémentée de un (étape 1030) et les étapes précédentes sont répétées (étapes 1005 à 1030) jusqu'à ce que les positions de tous les modules de localisation (ou modules valides de localisation) aient été déterminées.

La position et/ou l'orientation de chaque élément mobile sont calculées à partir des positions des modules de localisation. Ce calcul peut être effectué lorsque les positions de tous les modules valides de localisation ont été calculées ou, élément mobile par élément mobile, lorsque les positions de tous les modules valides de localisation appartenant à un même élément mobile ont été calculées.

Il est observé ici que la validité de modules de localisation peut notamment être liée à la logique de l'application utilisant l'interface formée par les éléments mobiles comprenant ces modules de localisation et le système de localisation de ces modules. A titre d'illustration, dans le cas d'un jeu, les modules non valides de localisation peuvent correspondre à des éléments mobiles représentant des pions non utilisés dans la partie, par exemple des pièces ayant été prises lors d'une partie d'échecs ou des pions non utilisés dans un scénario de jeu donné.

La figure 11 illustre un second exemple d'algorithme pouvant être utilisé pour activer séquentiellement un ensemble de modules de localisation et calculer les positions et/ou orientations des éléments mobiles correspondants.

Cet algorithme permet notamment de gérer le fait que certains éléments mobiles peuvent quitter la zone d'évolution (c'est-à-dire ici la surface de détection) et que les positions et/ou orientations des éléments mobiles correspondants ne nécessitent plus d'être estimées. Une boucle logicielle secondaire surveille cependant leur possible réintégration sur la surface de détection et le besoin induit d'estimer à nouveau leurs positions et/ou orientations. Cet algorithme permet, en comparaison avec l'algorithme décrit en référence à la figure 10, de réduire la durée globale de la séquence d'activation de l'ensemble des modules de localisation en gérant dynamiquement leur validité.

Dans cet algorithme, la constante M correspond au nombre maximum de modules de localisation supportés par le système, la variable i caractérise l'index d'un module de localisation, le tableau P correspond au tableau de positions des modules de localisation, le tableau V correspond au tableau de validité des modules de localisation, la variable C est une variable globale correspondant au nombre total de modules de localisation utilisés, K est une constante prédéterminée correspondant au nombre maximal d'itérations de recherche de modules de localisation hors surface de détection (une valeur typique pour K est de l'ordre d'une dizaine) et A est une variable représentant un index de décompte des itérations de recherche des modules de localisation situés hors surface de détection pour un cycle global.

Une première étape a pour objet d'initialiser les variables i et C à zéro (étape 1100). Dans une étape suivante la valeur de la variable i est comparée à celle de la constante M (étape 1102). Si la valeur de la variable i est inférieure à celle de la constante M, le tableau de validité des modules de localisation est mis à jour de telle sorte que le module de localisation correspondant à l'index i soit considéré comme valide (étape 1104). La variable i est alors incrémentée de un (étape 1106) et la nouvelle valeur de la variable i est comparée à celle de la constante M (étape 1102). Les étapes 1102 à 1106 permettent d'initialiser le tableau de validité des modules de localisation.

Si, au contraire, la valeur de la variable i est supérieure ou égale à celle de la constante M, la variable i est réinitialisée à zéro (étape 1108). Dans une étape suivante la valeur de la variable i est à nouveau comparée à celle de la constante M (étape 1110). Si la valeur de la variable i est inférieure à celle de la constante M, un test est effectué pour déterminer si le module de localisation correspondant à l'index i est valide (étape 1112).

Si le module de localisation correspondant à l'index i est valide, ce module est activé (étape 1114) de telle sorte qu'il émette un champ électromagnétique permettant sa localisation par mesure de tensions induites dans des boucles de la surface de détection.

Le module de pilotage de détection et de capture de position est alors en mesure de calculer la position et, le cas échéant, l'orientation du module de localisation activé (étape 1116).

Un test est alors effectué sur les coordonnées obtenues du module de localisation (étape 1118). Si ces coordonnées sont nulles, le tableau de validité des modules de localisation est mis à jour de telle sorte que le module de localisation correspondant à l'index i soit considéré comme non valide (étape 1120). Dans le cas contraire, si ces coordonnées ne sont pas nulles, ces coordonnées sont mémorisées pour être exploitées par le module de calcul (étape 1122). Elles peuvent notamment être mémorisées dans le tableau de positions des modules de localisation à partir duquel peuvent être estimés les positions et/ou orientations des éléments mobiles comprenant ces modules de localisation, comme décrit précédemment.

La variable i est alors incrémentée de un (étape 1124) et sa valeur est à nouveau comparée à celle de la constante M (étape 1110).

De même, si le module de localisation correspondant à l'index i n'est pas valide (étape 1112), la variable i est incrémentée de un (étape 1124) et sa valeur est à nouveau comparée à celle de la constante M (étape 1110).

Si la valeur de la variable i est supérieure ou égale à celle de la constante M (étape 1110), la valeur de la variable A est initialisée à la valeur zéro (étape 1126). Un test est alors effectué pour comparer la valeur de la variable A à celle de la constante K (étape 1128). Si la valeur de la constante K est inférieure ou égale à celle de la variable A, la valeur de la variable i est réinitialisée à zéro (étape 1108) et les étapes décrites précédemment sont répétées.

Dans le cas contraire, un test est effectué pour déterminer si le module de localisation correspondant à un index dont la valeur est égale à C est non valide (étape 1130).

Dans l'affirmative, ce module est activé (étape 1132) de telle sorte qu'il émette un champ électromagnétique permettant sa localisation, par exemple par mesure de tensions induites dans des boucles de la surface de détection.

Le module de pilotage de détection et de capture de position est alors en mesure de calculer la position du module de localisation activé (étape 1134).

Un test est alors effectué sur les coordonnées obtenues du module de localisation (étape 1136). Si ces coordonnées sont nulles, le tableau de validité des modules de localisation est mis à jour de telle sorte que le module de localisation correspondant à l'index dont la valeur est égale à celle de la variable C soit considéré comme non valide (étape 1138). Dans le cas contraire, le tableau de validité des modules de localisation est mis à jour de telle sorte que le module de localisation correspondant à l'index dont la valeur est égale à celle de la variable C soit considéré comme valide (étape 1140).

Les valeurs des variables A et C sont alors incrémentées de un (étape 1142). De même, si le module de localisation correspondant à un index dont la valeur est égale à celle de la variable C n'est pas non valide (étape 1130), les valeurs des variables A et C sont alors incrémentées de un (étape 1142).

Un test est alors effectué pour comparer la valeur de la variable C à celle de la constante M (étape 1144). Si la valeur de la variable C est inférieure à celle de la constante M, les valeurs de la variable A et de la constante K sont comparées (étape 1128) et les étapes décrites précédemment sont répétées.

Si la valeur de la variable C est supérieure ou égale à celle de la constante M, la valeur de la variable C est réinitialisée à la valeur zéro (étape 1146). Les valeurs de la variable A et de la constante K sont alors comparées (étape 1128) et les étapes décrites précédemment sont répétées.

Selon un troisième exemple d'algorithme pouvant être utilisé pour activer séquentiellement un ensemble de modules de localisation et calculer les positions et/ou orientations des éléments mobiles correspondants, l'activation de tous les modules de localisation est initiée par un système de traitement central (module de pilotage de détection et de capture de position) à l'aide d'un signal d'activation commun, chaque module de localisation déterminant de façon autonome son activation en fonction du signal d'activation commun. La définition des valeurs de temporisation associées à chaque module de localisation, c'est-à-dire ici le délai entre la détection du signal d'activation commun (ou d'une de ses caractéristiques appelée « instruction » d'activation dans la suite de la description) et l'activation du module de localisation, peut s'effectuer de façon statique, par exemple en utilisant un identifiant stocké dans les modules de localisation comme clé de calcul, ou de façon dynamique.

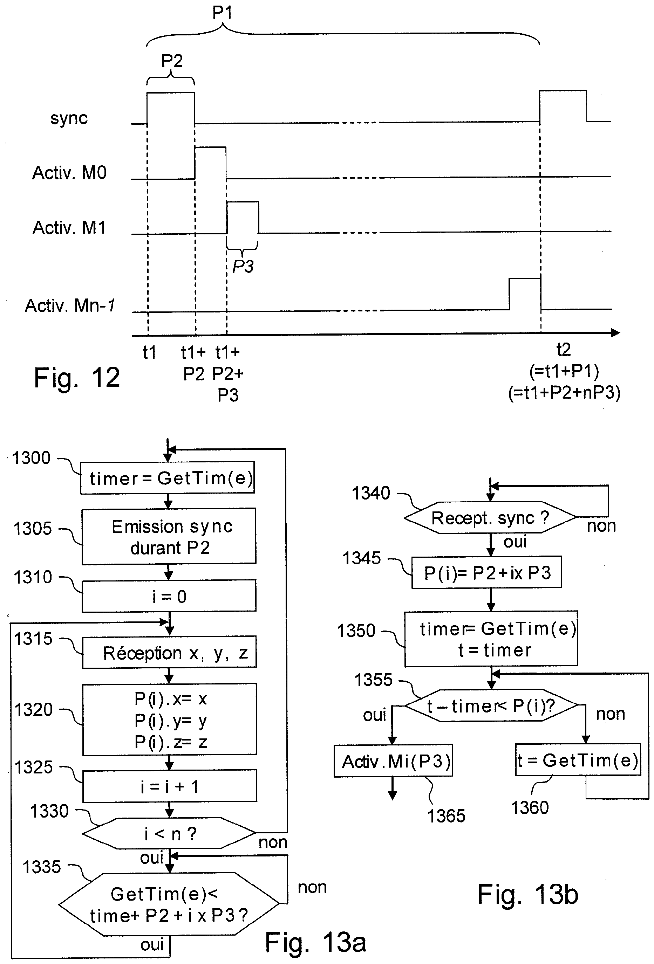

La figure 12 illustre un exemple de chronogramme d'activation de modules de localisation en fonction d'un signal d'activation commun.

Comme illustré, un signal d'activation commun, noté *sync,* comprend ici des impulsions périodiques, de période *P1* et de durée P2. Chaque impulsion du signal *sync,* représentant une « instruction » d'activation, a pour objet l'activation séquentielle des modules de localisation (tous ou ceux préalablement sélectionnés). P2 correspond à la durée minimale garantissant la détection du signal commun par tous les modules de localisation concernés.

Lors de la réception d'une « instruction » d'activation du signal *sync,* chaque module de localisation calcul ou détermine la valeur de temporisation à la fin de laquelle il doit être activé, c'est-à-dire, typiquement, l'instant auquel le commutateur 715 commande l'amplificateur sélectif 720 pour générer une tension sinusoïdale aux bornes du solénoïde 730, permettant à ce dernier de générer une puissance de rayonnement suffisante. Le commutateur 715 est, par exemple, selon cet exemple, un microcontrôleur ou un circuit comprenant deux bascules monostables (l'une étant utilisée comme compteur et l'autre comme commutateur).

L'activation de chaque module de localisation i est représentée, sur la figure 12, par un signal *Activ. Mi.* Ainsi, par exemple, le module de localisation 0 est activé entre les instants *t1+P2* et *t1+P2+P3,* P3 correspondant ici à la durée d'activation de chaque module de localisation *(P3* est ici défini tel que *P1=P2+nxP3,* où n représente le nombre de modules de localisation devant être activés durant une période *P1),* comme représenté par le signal *Activ. M0.* De même, le module de localisation 1 est activé entre les instants *t1+P2+P3* et *t1+P2+2xP3,* comme représenté par le signal *Activ. M1.* Plus généralement, le module de localisation *i* est activé entre les instants *t+P2+ixP3* et *t+P2+(i+1)xP3* où *t* représente l'instant de réception d'une « instruction » d'activation d'un signal d'activation commun.

La figure 13, comprenant les figures 13a et 13b, illustre le troisième exemple d'algorithme pouvant être utilisé pour activer séquentiellement un ensemble de modules de localisation à l'aide d'un signal d'activation commun. La figure 13a représente certaines étapes mises en oeuvre dans le système de traitement central tandis que la figure 13b représente certaines étapes mises en oeuvre dans chaque module de localisation.

Comme illustré sur la figure 13a, une première étape (étape 1300) consiste ici à obtenir une valeur représentant l'instant présent, par exemple à l'aide de la fonction *GetTime(),* cette valeur étant mémorisée dans une variable *time.* Le signal d'activation commun *sync,* ou plus précisément une « instruction » d'activation, est alors émis durant l'intervalle de temps P2 (étape 1305) et la variable i, représentant un index de module de localisation, est initialisée à zéro (étape 1310).

Dans une étape suivante, la position (en deux ou en trois dimensions) d'un module de localisation activé est obtenue (étape 1315). Cette position peut notamment être obtenue comme décrit précédemment à l'aide d'une unité centrale de traitement (255, 255' ou 255"). La position obtenue est associée au module de localisation i (étape 1320) et la valeur de la variable i est incrémentée de un (étape 1325).

Un test est alors effectué pour déterminer si la valeur de la variable i est inférieure au nombre n de modules de localisation dont les positions sont estimées au cours d'une période *P1*. Dans la négative, c'est-à-dire après avoir obtenu la position de chaque module de localisation dont les positions sont estimées au cours d'une période *P1*, l'algorithme retourne à l'étape 1300 pour recommencer un nouveau cycle d'obtention de positions.

Si, au contraire, la valeur de la variable *i* est inférieure au nombre n de modules de localisation dont les positions sont estimées au cours d'une période *P1*, l'instant présent est comparé à l'instant préalablement mémorisé (*time*) auquel sont ajoutées la période P2 et autant de fois la période P3 multipliée par la valeur de l'index i, soit *time + P2 + i x* P3 (étape 1335).

Si la valeur représentant l'instant courant est inférieure à la valeur *time + P2 + i x P3,* l'algorithme reboucle à l'étape 1335 (le module de localisation dont la position a été obtenue étant toujours activé, la position d'un autre module de localisation ne peut être obtenue). Si, au contraire, la valeur représentant l'instant courant n'est pas inférieure à la valeur *time + P2 + i x P3,* l'algorithme retourne à l'étape 1315 pour obtenir la position du module de localisation ayant l'index i (dont la valeur a été précédemment incrémentée).

Parallèlement aux étapes décrites en référence à la figure 13a, chaque module de localisation dont la position doit être obtenue exécute des étapes telles que celles illustrées sur la figure 13b.

Après avoir reçu une « instruction » d'activation (étape 1340), typiquement une impulsion du signal *sync,* une valeur de temporisation P(i), où *i* représente un index de module de localisation (différent pour chaque module de localisation et compris entre zéro et le nombre de module de localisation moins un), est calculée (étape 1345) selon l'expression suivante :

$$P(i) = P2 + i \text{ x } P3$$

*P(i)* représente ainsi une durée entre le début de « l'instruction » d'activation du signal d'activation commun et le début de l'activation du module de localisation ayant l'index i.

Une valeur représentant l'instant présent est alors obtenue, par exemple à l'aide de la fonction *GetTime(),* et assignée aux variables t et *timer* (étape 1350).

Ensuite, la valeur de la variable *timer* est retranchée de celle de la variable *t* et le résultat est comparé à la valeur de temporisation *P(i)* préalablement calculée (étape 1355).

Si la différence entre les variables *t* et *timer* n'est pas inférieure à la valeur de temporisation *P(i)*, une valeur représentant l'instant présent est à nouveau obtenue et assignée à la variable *t* (étape 1360) et l'algorithme retourne à l'étape 1355. Au contraire, si la différence entre les variables *t* et *timer* est inférieure à la valeur de temporisation *P(i)*, le module de localisation ayant l'index *i* est activé durant un intervalle de temps *P3* (étape 1365) de telle sorte que sa position puisse être obtenue.

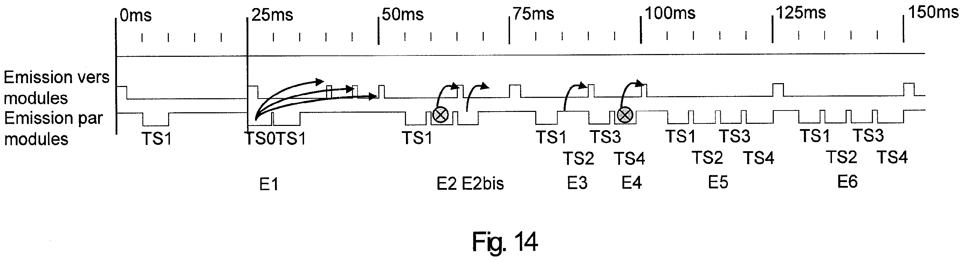

Alors que l'ordre d'activation des modules de localisation peut être prédéterminé et correspondre à des index de ces derniers (ou à une donnée similaire), il est également possible d'utiliser un système d'activation dynamique des modules de localisation comme décrit ci-dessous en référence à la figure 14. Un tel système peut notamment être basé sur un algorithme d'accès multiples à répartition dans le temps (la technique d'accès multiple à répartition dans le temps est notamment exploitée par les réseaux de téléphonie mobile de seconde génération tels que le GSM, sigle de Global System for Mobile communications en terminologie anglo-saxonne, et des variantes selon lesquelles le nombre de *timeslots* peut être réservé dynamiquement existent dans des normes telles que la norme Bluetooth, Bluetooth est une marque).

Un tel mode de réalisation présente l'avantage de ne pas nécessiter de positions prédéfinies dans la séquence d'activation des modules de localisation. Par ailleurs, une telle gestion dynamique permet de résoudre des conflits entre des modules de localisation qui auraient des valeurs de temporisation calculées ou prédéfinies identiques.

Selon un mode de réalisation particulier, la durée entre deux « instructions » d'activation du signal d'activation commun est divisée en un nombre n+1 de tranches de temps (appelées *timeslots* en terminologie anglo-saxonne), de durée fixe et prédéterminée, référencées TS0 à TSn. Un cycle d'activation commun contient donc *n+1 timeslots.*

Le premier *timestot TS0* débute au moment de l'émission d'une « instruction » d'activation du signal d'activation commun. Il est spécifique et réservé à l'arrivée de nouveaux modules de localisation.

Pendant la durée du *timeslot TS0* les modules de localisation n'ayant pas encore de *timeslot* affecté émettent via leur solénoïde. Si le système de traitement central reçoit des signaux de la part de modules de localisation pendant la durée du *timeslot TS0,* le système de traitement central émet un signal d'activation secondaire à la fin de chaque *timeslot* non affecté. Ce signal d'activation secondaire peut, par exemple, être une tonalité spécifique modulant un signal FM. Les modules de localisation sont alors informés de l'ensemble des *timeslots* libres.

Chaque module de localisation réalise un tirage aléatoire pour déterminer un *timestot* libre durant lequel il émettra lors du prochain cycle.

A chaque cycle et pour chaque *timeslot* libre se présentent les trois possibilités suivantes :

- le *timeslot* reste libre : aucun module de localisation ne l'a sélectionné. Le système de traitement central continue donc d'indiquer que le *timestot* est libre en émettant un signal d'activation secondaire à la fin du *timeslot* ;
- le *timeslot* a été sélectionné par un unique module de localisation qui émet durant la durée du *timeslot :* le système de traitement central cesse alors d'émettre un signal d'activation secondaire à la fin de ce *timestot.* La disparition du signal d'activation secondaire informe le module de localisation que son assignation de *timeslot* est effective ; et,
- le *timestot* a été sélectionné par plusieurs modules de localisation qui émettent durant la durée du *timeslot :* le système de traitement central détecte une collision de signaux et continue d'indiquer que le *timeslot* est libre en émettant un signal d'activation secondaire à la fin du *timeslot.*

Les cas de collisions sont par exemple résolus par des algorithmes tels que ceux mentionnés dans le chapitre « *Collision backoff and retransmission* » de la norme Ethernet IEEE 802.3.

La libération de *timeslots* est gérée par la détection de l'absence d'émission par un module de localisation. Une temporisation est alors déclenchée. Si durant toute la temporisation, le système de traitement central ne reçoit pas d'émission de la part d'un module de localisation, le *timeslot* correspondant est considéré comme libéré.

Le chronogramme représenté sur la figure 14 illustre des cycles d'activation de 25ms pour lesquels le système de traitement central émet une « instruction » d'activation (dans un signal d'activation commun) au début de chaque cycle, chaque cycle étant divisé en cinq *timeslots* référencés *TS0* à *TS4.*

Les croix sur le chronogramme indiquent des collisions lors des allocations de *timeslots* aux modules de localisation.

Par hypothèse, lors du premier cycle du chronogramme, le *timestot TS1* est ici déjà alloué à un module de localisation qui émet.

Les étapes E1 à E6 du chronogramme illustrent l'allocation de *timestots* à des modules de localisation qui apparaissent sur la surface de détection considérée :

- étape E1 : les nouveaux modules de localisation (n'ayant pas de *timestot* alloué) émettent par défaut sur le *timestot TS0.* En réponse, le système de traitement central émet des signaux d'activation secondaire à la fin des *timeslots* libres (ici les *timeslots TS2, TS3* et *TS4*). Les nouveaux modules de localisation effectuent des tirages aléatoires d'assignation de *timestots* sur la base des *timestots* libres. Deux d'entre eux sélectionnent le *timeslot TS2,* un troisième sélectionne le *timeslot TS3 ;*
- étape E2 : il y a conflit sur le *timestot TS2.* Le système de traitement central le signale en maintenant l'émission du signal d'activation secondaire à la fin du *timeslot,* indiquant aux modules de localisation en attente d'assignation que le *timestot TS2* reste libre. Les modules de localisation effectuent un nouveau tirage aléatoire ;
- étape E2bis : il n'y a pas de conflit sur le *timestot TS3,* la demande d'assignation est acceptée. Le système de traitement central le signale en interrompant l'émission du signal d'activation secondaire à la fin du *timeslot TS3.* Ce *timeslot* est désormais assigné ;
- étape E3 : aucun module de localisation n'a sélectionné le *timestot TS2.* Le système de traitement central signale qu'il est toujours disponible en émettant un signal d'activation secondaire à la fin du *timeslot TS2 ;*
- étape E4 : il y a collision sur le *timestot TS4.* Le signal d'activation secondaire est maintenu à la fin de ce *timeslot* pour indiquer qu'il n'est toujours pas assigné ;

- étape E5 : les deux modules de localisation non assignés ont sélectionné les *timeslots TS2* et *TS4.* Il n'y a pas de conflit et les assignations sont acceptées. Le système de traitement central cesse d'émettre des signaux d'activation secondaire à la fin de ces *timestots* pour indiquer qu'ils sont alloués ; et,
- étape E6 : régime permanent, chaque module de localisation s'est vu allouer un *timeslot.*

Bien que dans l'exemple décrit ici le nombre final de modules de localisation soit égal au nombre de *timestots* par cycle d'activation, les mécanismes d'activation n'imposent pas une telle contrainte.

Le signal d'activation commun peut être détecté dans chaque module de localisation par un récepteur haute fréquence qui démodule le signal d'activation commun et le transmet vers un microcontrôleur en charge du calcul de la temporisation associée au module de localisation. Lorsque la durée de la temporisation est écoulée, le module de localisation émet un signal de localisation par l'intermédiaire de son solénoïde en produisant, par exemple, un signal carré pendant une durée P3 à la fréquence de résonance de l'amplificateur sélectif connecté au solénoïde.

Alternativement, la détection, dans le récepteur haute fréquence d'un module de localisation, d'un passage à un état particulier du signal d'activation commun, par exemple un état haut, peut déclencher une première bascule monostable configurée pour produire une impulsion après une durée de temporisation *P(i)* allouée au module de localisation. Lorsque la durée de la temporisation est écoulée, le front descendant de la première bascule monostable déclenche une seconde bascule monostable qui relie l'oscillateur local à l'amplificateur sélectif connecté au solénoïde pendant une durée P3. Dans ce mode de réalisation, les bascules monostables peuvent être implémentées à l'aide de compteurs binaires ou de circuits exploitant le temps de charge d'un circuit RC. L'oscillateur local peut servir de signal d'horloge des compteurs binaires.

Le signal d'activation commun peut être un signal spécifique ou un signal existant. Ainsi, par exemple, il est possible d'utiliser le signal induit par la trame de synchronisation d'un écran utilisé comme signal d'activation commun, permettant de supprimer le récepteur haute fréquence dans l'élément mobile. Dans ce cas, le récepteur haute fréquence est ici remplacé par une boucle d'induction accordée sur la fréquence de rafraichissement de l'écran. Cette boucle d'induction est constitutive d'un montage RLC résonant sur la fréquence propre de l'écran et connectée à l'entrée du convertisseur analogique/numérique du microcontrôleur en charge du calcul de la temporisation associée au module de localisation.

De façon similaire, le récepteur haute fréquence peut être remplacé par une boucle d'induction accordée sur la fréquence de télé-alimentation des modules de localisation (l'émission de la fréquence de télé-alimentation étant interrompue de façon cyclique pour fournir le signal d'activation commun).

Il convient de remarquer ici que le signal d'activation commun, comme un signal de télé-alimentation de modules de localisation, peut être utilisé pour transférer des données à des modules de localisation, par exemple en utilisant un encodage en modulation de fréquence.

De même, les signaux de localisation émis par les modules de localisation peuvent être utilisés par les modules de localisation pour adresser des données, par exemple un identifiant du module de localisation considéré et/ou l'état d'un interrupteur, au système de traitement central.

Selon un mode de réalisation particulier, un microcontrôleur d'un module de localisation mobile génère un signal carré de fréquence variable. Cette modulation de fréquence permet d'encoder un train binaire correspondant aux données à transférer, une fréquence $F1$ correspondant à un état bas et une fréquence F2 correspond à un état haut. Les fréquences $F1$ et F2 sont de préférence proches de la fréquence de l'amplificateur sélectif du module de localisation de telle sorte que le gain de l'amplificateur sélectif soit élevé.

Toujours selon un mode de réalisation particulier, les modules de localisation n'émettant que durant des *timeslots* qui leur sont attribués, le système de traitement central est en mesure d'identifier de quel module de localisation proviennent les données reçues.

Selon un autre mode de réalisation particulier, l'oscillateur local situé dans l'élément mobile génère un signal de fréquence variable. Cette modulation de fréquence est réalisée, par exemple, par le biais d'une polarisation extérieure induite par un changement d'impédance en entrée de l'oscillateur local. A nouveau, cette modulation de fréquence permet d'encoder le train binaire correspondant aux données à transférer. Le signal modulé reçu par le système de traitement central peut être traité par une entrée analogique de ce système pour être converti et mémorisé.

De façon alternative, le signal reçu par le système de traitement central est démodulé par un circuit de démodulation analogique afin de reconstituer le signal en bande. Selon une autre alternative, le signal reçu est amplifié et envoyé sur une entrée d'horloge d'un compteur interne tandis qu'un second compteur interne sert de référence temporelle interne. Ce second compteur est déclenché sur réception du front montant du signal amplifié puis est stoppé lorsque le premier compteur atteint une valeur préalablement définie. La valeur obtenue à l'arrêt du second compteur est utilisée pour discriminer les fréquences du signal modulé. Plus la valeur à atteindre par le premier compteur est élevée et plus la fréquence d'horloge du second compteur est grande au regard des fréquences du signal modulé, plus les fréquences du signal modulé pourront être discriminées. De façon générale, le débit sera de $log_2$ *(nombre de fréquence discriminées)* par cycle d'activation.

Les transferts de données vers ou depuis des modules de localisation peuvent être chiffrés de façon standard en utilisant, par exemple des clés publiques et privées de type RSA.

La durée d'activation d'un module de localisation peut également être caractéristique d'une donnée à transmettre par ce dernier, notamment de son identité.

Il est observé ici que l'utilisation d'un commutateur dans les modules de localisation pour alimenter les éléments rayonnants (solénoïdes ou similaires) utilisés pour déterminer leur position permet de localiser ces modules en temps réel et, par conséquent, d'autoriser la prise en charge d'un grand nombre de modules de localisation. En effet, comme illustré sur les figures 7 et 8, le signal d'excitation du solénoïde des modules de localisation est toujours disponible, ce signal étant transmis ou non au solénoïde en fonction de la position du commutateur 715 (pouvant notamment intégrer un microcontrôleur ou des bascules monostables) et le temps de commutation étant ici négligeable.

A titre d'illustration, en supposant que le cycle d'obtention des positions de modules de localisation soit de 50Hz et que 50 modules de localisation sont utilisés, le temps d'activation de chaque module de localisation est d'environ 0,4ms. Si le temps d'établissement et d'arrêt est de l'ordre de 1% de la durée d'activation, celui-ci doit être de l'ordre de 40μs.

Selon un mode de réalisation particulier, la fréquence d'émission du solénoïde des modules de localisation est dimensionnée dans une plage proche de 100 KHz. A cette fréquence, le couplage électromagnétique entre le module de localisation et les boucles de la surface de détection est principalement d'ordre magnétique.

Ce choix de la fréquence permet de limiter les perturbations induites par un écran (positionné entre la surface de détection et les modules de localisation) sur le couplage électromagnétique entre les modules de localisation et la surface de détection (le rayonnement d'un écran est principalement de nature électrique). Il est donc possible de placer la surface de détection et les modules de localisation de part et d'autre de l'écran en conservant un fonctionnement optimal du système.

Il est rappelé que l'intensité du champ magnétique généré par un solénoïde est donnée par la formule suivante :

$$B = c \cdot I \cdot \frac{N}{L}$$

où c est une constante, $I$ est l'intensité du courant qui traverse le solénoïde, N est le nombre de spires du solénoïde et L est la longueur du solénoïde.

Les dimensions du solénoïde étant contraintes de sorte que les dimensions du module de localisation soient réduites et en permettent l'intégration dans des objets usuels et L étant typiquement de l'ordre de quelques millimètres, N est alors dimensionné pour obtenir une intensité de champ magnétique suffisante.

En outre, pour permettre un couplage correct à travers la surface d'un écran, la valeur du courant traversant le solénoïde doit être optimisée. C'est ce qu'assure la mise en oeuvre de l'oscillateur local couplé à l'amplificateur sélectif rayonnant. L'oscillateur local génère la fréquence de résonnance exacte de l'amplificateur sélectif rayonnant. Lorsqu'il est activé, l'amplificateur sélectif rayonnant fonctionne à sa fréquence exacte de résonnance et assure que le courant qui traverse le solénoïde est maximal.

Selon l'application visée, il peut être nécessaire de limiter l'exploitation du système à un sous-ensemble de modules de localisation disponibles ou d'associer à certains modules de localisation une fonction particulière. Ainsi, dans une phase d'initialisation du système, il peut être nécessaire de définir une liste de modules de localisation dont la position ne doit pas être calculée (leur émission électromagnétique n'est pas activée par le module d'activation). Cette liste peut varier dans le temps et peut différer de sa valeur initiale définie lors de la phase d'initialisation. Il est également possible, dans une phase d'initialisation, d'affecter à un module de localisation ou à un élément mobile une fonction ou un rôle spécifique. Ainsi, par exemple, un élément mobile associé à un module de localisation prédéfinie peut jouer le rôle d'un Roi si cet élément mobile est exploité dans un programme de jeu d'échecs, ce même élément mobile pouvant également jouer le rôle d'une gomme ou d'un feutre dans une application de dessin ou encore avoir le rôle d'une voiture dans un programme d'éducation routière.

A titre d'exemple, l'association entre des modules de localisation et une fonction peut être effectuée en disposant les éléments mobiles comprenant ces modules de localisation sur des parties spécifiques de la surface de détection et en déclenchant un enregistrement. Le module de pilotage de détection et de capture de position effectue alors une séquence complète d'activation et les rôles sont associés en fonction des positions respectives des éléments mobiles (par exemple pièces d'un camp A versus pièces d'un camp B).

Lorsqu'un écran est superposé à la surface de détection, il est possible de choisir un rôle dans un menu contextuel pour chaque élément mobile en affichant un menu, près de la position de chaque élément mobile, proposant les différents rôles possibles.

Une application particulière de l'invention concerne les jeux de société en permettant de conserver l'aspect convivial des jeux de plateaux et le plaisir de manipuler de véritables pions ou figurines tout en bénéficiant de l'interactivité et du dynamisme des jeux vidéo. Dans ce domaine d'application, un large écran tactile est, de préférence, superposé à la surface de détection des pièces.

Les modules de localisation sont avantageusement placés dans les socles des figurines utilisées dans le jeu assurant ainsi la détection de la position des figurines dans le jeu.

L'écran tactile peut afficher la piste de jeu sur laquelle vont évoluer les figurines, offrant ainsi un support visuel dynamique. Typiquement, l'écran affiche l'environnement animé et réaliste dans lequel sont immergées les figurines (des couloirs dans un vaisseau spatial pour un jeu de science-fiction, des zones géographiques pour un jeu de type « risk », un échiquier si les figurines sont des pièces d'échecs, etc.).

Lors du lancement de jeu, le système propose une assignation de fonction aux éléments mobiles afin de permettre au programme de faire une relation entre l'identifiant d'un ou de plusieurs modules de détection et la figurine représentée par cette élément mobile. Ceci peut s'effectuer en affichant un menu spécifique de sélection de rôle sur l'écran près de la position de chaque figurine disposée sur le plateau.

Lorsque des pièces sont enregistrées, c'est-à-dire que leurs rôles leur ont été assignés, elles deviennent de véritables interfaces du jeu. Le système peut alors vérifier en permanence que les mouvements des figurines respectent bien les limites de déplacement imposées par les règles de jeu en prenant en compte leur rôle dans le jeu (se déplacer de case en case dans un couloir par exemple, respecter les mouvements appropriés pour un jeu d'échecs, etc.). Le système peut également calculer et afficher sur l'écran les lignes de vue entre deux figurines dans un jeu de combat ou calculer et afficher automatiquement les prises possibles aux échecs. Il est également possible de déclencher des animations visuelles contextuelles sous une figurine ou à partir d'une figurine. Ainsi, sélectionner un tir d'arme sur le menu d'une figurine peut faire apparaître un éclairage spécifique autour du tireur et la visualisation de balles traçantes entre deux figurines. De façon similaire, il est possible de déclencher des animations sonores contextuelles lorsque la position relative de deux figurines le permet. Par exemple, lorsqu'en déplaçant une figurine, le système détermine l'existence d'une ligne de vue avec une autre figurine, une alarme sonore « cible en vue » peut être déclenchée par le système.

De même, il est possible d'afficher des menus contextuels dépendant de la position des figurines (un menu de calcul de résultat d'un combat au corps à corps s'affiche si deux figurines ennemies sont à une distance minimale), offrir une aide en ligne automatique lorsqu'un joueur effectue un mouvement interdit avec sa figurine et modifier l'affichage sur l'écran lorsque les joueurs effectuent des rotations avec les figurines.

Par ailleurs, des caractéristiques spécifiques (couleur, fonction de gomme ou épaisseur de trait pour un élément mobile représentant un crayon) peuvent être associées aux différents éléments mobiles. Elles peuvent être transmises par les modules de localisation (directement ou en fonction de valeurs de temporisation associées) comme décrit précédemment. La sélection d'une fonction ou d'une couleur peut être visualisée sur l'objet comprenant le module de localisation considéré par l'affichage de LED (acronyme de *Light-Emitting Diode* en terminologie anglo-saxonne) dédiée par exemple.

Pour un même élément mobile, il est par ailleurs possible de changer ses caractéristiques en modifiant l'un de ces paramètres sur action de l'utilisateur (une bague, une roue codeuse ou un interrupteur sur le stylo par exemple). Sur la base de ces interventions mécaniques, un microcontrôleur présent dans le module de localisation peut modifier la valeur de temporisation associée ou transmettre la donnée, notamment sous la forme d'un train binaire, indiquant qu'une nouvelle fonction a été sélectionnée.

D'autres applications particulières de l'invention concernent le contrôle d'objets autonomes tels que des voitures, des bateaux, des hélicoptères et des avions. Ainsi, par exemple, pour une course de voiture, l'invention peut fournir une aide au pilotage pour une voiture contrôlée par un joueur et contrôler d'autres véhicules pilotés par le système. Si les véhicules sont dotés de deux modules de localisation, il est possible de lisser les trajectoires calculées.

De même, pour une application de pilotage d'hélicoptères, l'invention peut fournir une aide au pilotage notamment pendant les phases de décollage et d'atterrissage en bénéficiant d'une simplification de l'électronique embarquée dans l'hélicoptère (le gyroscope habituellement utilisé devient inutile par exemple). Si le mobile volant est équipé de trois modules de localisation, l'asservissement peut être réalisé en trois dimensions, le système de traitement central disposant en temps réel des six degrés de liberté (abscisse, ordonnée, altitude, tangage, roulis et cap).

Naturellement, pour satisfaire des besoins spécifiques, une personne compétente dans le domaine de l'invention pourra appliquer des modifications dans la description précédente.

## Revendications

**1.** Procédé pour interfacer en temps réel une pluralité d'éléments mobiles (110, 110') avec un système informatique, le procédé comprenant les étapes suivantes,

- transmission (1015, 1114, 1305) d'un signal d'activation à au moins un module de localisation (700, 700-1, 700-2) intégré à au moins un élément mobile de ladite pluralité d'éléments mobiles ;
- activation séquentielle dudit au moins un module de localisation, ladite activation comprenant une étape de commutation pour exciter, en réponse à la réception dudit signal d'activation, un élément rayonnant dudit au moins un module de localisation ;
- réception d'au moins un signal dudit au moins un module de localisation activé, au moyen d'une surface de détection (115) comprenant un maillage de type ligne/colonne de captation électromagnétique ;
- mesure de tensions induites dans le maillage de type ligne/colonne de la surface de détection ;
- calcul (1020, 1116), à partir des tensions induites mesurées, d'au moins une information de position dudit élément mobile comprenant ledit au moins un module de localisation activé,

un seul module de localisation pouvant être activé à un instant donné,

**caractérisé en ce que**
ledit signal d'activation est un signal d'activation commun pour contrôler de façon commune l'activation d'une pluralité de modules de localisation ; et le procédé comprend en outre une étape de calcul d'une valeur de temporisation pour chaque module de localisation de ladite pluralité de modules de localisation, ladite valeur de temporisation représentant un intervalle de temps entre la réception d'un signal d'activation et l'activation du module de localisation.

**2.** Procédé selon la revendication 1 selon lequel chaque valeur de temporisation est déterminée selon une donnée d'identification du module de localisation.

**3.** Procédé selon la revendication 1 selon lequel chaque valeur de temporisation est déterminée dynamiquement.

**4.** Procédé selon la revendication 3 selon lequel chaque valeur de temporisation est déterminée selon un algorithme d'accès multiples à répartition dans le temps permettant d'associer un module de localisation à une tranche de temps.

**5.** Procédé selon la revendication 4 comprenant en outre les étapes suivantes,

- signalisation d'au moins une tranche de temps non attribuée à un module de localisation et
- sélection d'une tranche de temps non attribuée par au moins un module de localisation non associé à une tranche de temps.

**6.** Procédé selon la revendication 5 comprenant en outre une étape de signalisation de l'assignation d'une tranche de temps à un module de localisation.

**7.** Procédé selon l'une quelconque des revendications 4 à 6 comprenant en outre une étape de libération d'une tranche de temps attribuée à un module de localisation, la tranche de temps libérée devenant

**8.** Procédé selon l'une quelconque des revendications 1 à 7 selon lequel ledit signal d'activation commun est induit d'un signal existant indépendamment dudit procédé.

**9.** Procédé selon l'une quelconque des revendications précédentes comprenant en outre une étape de calcul d'au moins une information d'orientation dudit élément mobile, ledit élément mobile comprenant au moins deux modules de localisation.

**10.** Procédé selon l'une quelconque des revendications précédentes comprenant en outre une étape de transmission d'au moins une donnée dudit au moins un module de localisation audit système informatique.

**11.** Procédé selon l'une quelconque des revendications précédentes comprenant en outre une étape de contrôle de validité (1010, 1112) dudit au moins un module de localisation, ladite étape d'activation séquentielle dudit au moins un module de localisation étant effectuée en réponse à ladite étape de contrôle de validité.

**12.** Procédé selon la revendication 11 comprenant en outre une étape d'assignation (1138, 1140) d'un état de validité ou d'invalidité audit au moins un module de localisation, ledit état de validité ou d'invalidité étant déterminé selon ladite au moins une information de position.

**13.** Procédé selon l'une quelconque des revendications précédentes selon lequel ladite étape de réception d'au moins un signal comprend une étape de sélection séquentielle d'une pluralité de récepteurs, ledit au moins un signal étant reçu d'au moins un récepteur sélectionné dans ladite pluralité de récepteurs.

**14.** Elément mobile (100, 110') pour dispositif pour interfacer une pluralité d'éléments mobiles avec un système informatique, ledit élément mobile étant **caractérisé en ce qu'**il comprend au moins un module de localisation (700, 700-1, 700-2), ledit module de localisation comprenant les moyens suivants,

- moyens (730) pour émettre un signal permettant de calculer la position dudit module de localisation ;
- moyens (720, 725) pour générer un signal d'excitation desdits moyens pour émettre un signal ;
- moyens (715) de commutation pour contrôler la transmission dudit signal d'excitation auxdits moyens pour émettre un signal ; et,
- moyens (710) pour recevoir un signal d'activation et, selon au moins une information dudit signal d'activation, activer lesdits moyens de commutation pour permettre l'émission d'un signal permettant de calculer la position dudit module de localisation,

lesdits moyens pour recevoir un signal d'activation comprenant des moyens pour calculer une valeur de temporisation, ladite valeur de temporisation représentant un intervalle de temps entre la réception d'un signal d'activation et l'activation desdits moyens de commutation.

**15.** Elément mobile selon la revendication 14, ledit au moins un module de localisation comprenant au moins un solénoïde, excitable par induction, pour alimenter électriquement des composants dudit au moins un module de localisation.

**16.** Dispositif pour interfacer une pluralité d'éléments mobiles (110, 110') avec un système informatique, le dispositif comprenant une surface de détection (115) comprenant un maillage de type ligne/colonne de captation électromagnétique et des moyens adaptés à la mise en oeuvre de chacune des étapes du procédé selon l'une quelconque des revendications 1 à 13.

## Patentansprüche

**1.** Verfahren zur Echtzeit-Kopplung einer Mehrzahl von beweglichen Elementen (110, 110') mit einem Computersystem, wobei das Verfahren die nachfolgenden Schritte umfasst:

- Übertragen (1015, 1114, 1305) eines Aktivierungssignals an zumindest ein Lokalisierungsmodul (700, 700-1, 700-2), das in zumindest einem beweglichen Element aus der Mehrzahl von beweglichen Elementen integriert ist;
- sequentielles Aktivieren des zumindest einen Lokalisierungsmoduls, wobei das Aktivieren einen Schritt des Umschaltens umfasst, um in Reaktion auf das Empfangen des Aktivierungssignals ein Strahlungselement des zumindest einen Lokalisierungsmoduls anzuregen,
- Empfangen zumindest eines Signals von dem zumindest einen aktivierten Lokalisierungsmodul mittels einer Erfassungsfläche (115), die ein mit Zeilen/Spalten ausgeführtes Maschengitter zur elektromagnetischen Erfassung aufweist,
- Messen von Spannungen, die in dem mit Zeilen/Spalten ausgeführten Maschengitter der Erfassungsfläche induziert werden;
- Berechnen (1020, 1116) von zumindest einer Information über die Position des beweglichen Elements, das das zumindest eine aktivierte Lokalisierungsmodul enthält, ausgehend von den induzierten, gemessenen Spannungen,

wobei nur ein Lokalisierungsmodul zu einem gegebenen Zeitpunkt aktiviert sein kann, **dadurch gekennzeichnet, dass** das Aktivierungssignal ein gemeinsamen Aktivierungssignal ist, um die Aktivierung einer Mehrzahl von Lokalisierungsmodulen gemeinsam zu steuern; und das Verfahren ferner einen Schritt des Berechnens eines Verzögerungswerts für jedes Lokalisierungsmodul der Mehrzahl von Lokalisierungsmodulen umfasst, wobei der Verzögerungswert ein Zeitintervall zwischen dem Empfang eines Aktivierungssignals und der Aktivierung des Lokalisierungsmoduls darstellt.

2. Verfahren nach Anspruch 1, wobei jeder Verzögerungswert nach einem Identifizierungsdatenwert des Lokalisierungsmoduls bestimmt wird.

3. Verfahren nach Anspruch 1, wobei jeder Verzögerungswert dynamisch bestimmt wird.

4. Verfahren nach Anspruch 3, wobei jeder Verzögerungswert nach einem Mehrfachzugangs-Algorithmus mit zeitlicher Aufteilung bestimmt wird, wodurch einem Lokalisierungsmodul ein Zeitschlitz zugeordnet werden kann.

5. Verfahren nach Anspruch 4, ferner umfassend die nachfolgenden Schritte:

   - Signalisieren von zumindest einem Zeitschlitz, der nicht einem Lokalisierungsmodul zugewiesen ist, und
   - Auswahl eines nicht zugewiesenen Zeitschlitzes durch ein Lokalisierungsmodul, dem kein Zeitschlitz zugeordnet ist.

6. Verfahren nach Anspruch 5, ferner umfassend einen Schritt des Signalisierens der Zuteilung eines Zeitschlitzes zu einem Lokalisierungsmodul.

7. Verfahren nach einem der Ansprüche 4 bis 6, ferner umfassend einen Schritt der Freigabe eines einem Lokalisierungsmodul zugewiesenen Zeitschlitzes, wobei der freigegebene Zeitschlitz zu einem nicht zugewiesenen wird.

8. Verfahren nach einem der Ansprüche 1 bis 7, wobei das gemeinsame Aktivierungssignal aus einem unabhängig vom Verfahren bestehenden Signal induziert wird.

9. Verfahren nach einem der vorangehenden Ansprüche, umfassend ferner einen Schritt des Berechnens zumindest einer Information über die Ausrichtung des beweglichen Elements, wobei das bewegliche Element zumindest zwei Lokalisierungsmodule enthält.

10. Verfahren nach einem der vorangehenden Ansprüche, umfassend ferner einen Schritt des Übertragens von zumindest einem Datenwert des zumindest einen Lokalisierungsmoduls an das Computersystem.

11. Verfahren nach einem der vorangehenden Ansprüche, umfassend ferner einen Schritt der Kontrolle der Validierung (1010, 1112) des zumindest einen Lokalisierungsmoduls, wobei der Schritt der sequentiellen Aktivierung des zumindest einen Lokalisierungsmoduls in Reaktion auf den Schritt der Kontrolle der Validierung erfolgt.

12. Verfahren nach Anspruch 11, umfassend ferner einen Schritt der Zuteilung (1138, 1140) eines Validierungs- bzw. Nichtvalidierungszustands zum zumindest einen Lokalisierungsmodul, wobei der Validierungs- bzw. Nichtvalidierungszustand gemäß der zumindest einen Positionsinformation bestimmt wird.

13. Verfahren nach einem der vorangehenden Ansprüche, wobei der Schritt des Empfangens von zumindest einem Signal einen Schritt der sequentiellen Auswahl einer Mehrzahl von Empfängern umfasst, wobei das zumindest eine Signal von zumindest einem aus der Mehrzahl von Empfängern ausgewählten Empfänger empfangen wird.

14. Bewegliches Element (100, 110') für eine Vorrichtung zur Kopplung einer Mehrzahl von beweglichen Elementen mit einem Computersystem, wobei das bewegliche Element **dadurch gekennzeichnet ist, dass** es zumindest eine Lokalisierungsmodul (700, 700-1, 700-2) enthält, wobei das Lokalisierungsmodul die nachfolgenden Einrichtungen aufweist:

   - Einrichtungen (730) zum Ausgeben eines Signals, mit dem die Position des Lokalisierungsmoduls berechnet werden kann;
   - Einrichtungen (720, 725) zum Erzeugen eines Anregungssignals zum Anregen der Einrichtungen zum Ausgeben eines Signals;
   - Schalteinrichtungen (715) zum Steuern der Übertragung des Anregungssignals an die Einrichtungen zum Ausgeben eines Signals; und
   - Einrichtungen (710) zum Empfangen eines Aktivierungssignals und gemäß zumindest einer Information des Aktivierungssignals Aktivieren der Schalteinrichtungen, um das Ausgeben eines Signals zu gestatten, mit dem die Position des Lokalisierungsmoduls berechnet werden kann,

wobei die Einrichtungen zum Empfangen eines Aktivierungssignals Einrichtungen zum Berechnen eines Verzögerungswerts enthalten, wobei der Verzögerungswert ein Zeitintervall zwischen dem Empfang eines Aktivierungssignals und der Aktivierung der Schalteinrichtungen darstellt.

15. Bewegliches Element nach Anspruch 14, wobei das zumindest eine Lokalisierungsmodul zumindest ein Solenoid enthält, das durch Induktion anregbar ist, um Komponenten des zumindest einen Lokalisierungsmoduls elektrisch zu versorgen.

16. Vorrichtung zum Koppeln einer Mehrzahl von beweglichen Elementen (110, 110') mit einem Computersystem, wobei die Vorrichtung eine Erfassungsfläche (115) mit einem mit Zeilen/Spalten ausgeführten Maschengitter zur elektromagnetischen Erfassung und Einrichtungen enthält, die dazu ausgelegt sind, jeden der Schritte des Verfahrens nach einem der Ansprüche 1 bis 13 auszuführen.

**Claims**

1. Method for interfacing in real time a plurality of mobile elements (110, 110') with a computer system, the method comprising the following steps,

   - transmission (1015, 1114, 1305) of an activation signal to at least one localisation module (700, 700-1, 700-2) incorporated in at least one mobile element of said plurality of mobile elements;
   - sequential activation of said at least one localisation module, said activation comprising a switching step to excite, in response to the reception of said activation signal, a radiating element of said at least one localisation module;
   - reception of at least one signal from said at least one activated localisation module by means of a detection surface (115) comprising a grid of row/column for electromagnetic sensing;
   - measurement of voltages induced in the grid of row/column type of the detection surface:
   - calculation (1020, 1116), on the basis of said measured induced voltages, of at least one item of information on position of said mobile element comprising said at least one activated localisation module,

   a single localisation module being able to be activated at a given instant, **characterized in that** said activation signal is a common activation signal for common control of the activation of a plurality of localisation modules; and

the method further comprises a step to calculate a time delay value for each localisation module of said plurality of localisation modules, said time delay value representing a time interval between the reception of an activation signal and the activation of the localisation module.

2. Method according to claim 1 according to which each time delay value is determined according to an item of localisation module identification data.

3. Method according to claim 1 according to which each time delay value is dynamically determined.

4. Method according to claim 3 according to which each time delay value is determined according to a time-division multiple access algorithm making it possible to associate a location module with a timeslot.

5. A method according to claim 4, further comprising the following steps,

   - signalling of at least one timeslot not attributed to a localisation module and
   - selection of a timeslot not attributed by at least one localisation module not associated with a timeslot.

6. A method according to claim 5, further comprising a step of signalling of the assignment of a timeslot to a localisation module.

7. A method according to any one of claims 4 to 6 further comprising a step of freeing a timeslot attributed to a localisation module, the freed timeslot becoming not attributed.

8. Method according to any one of claims 1 to 7 according to which said common activation signal is induced by a signal existing independently of said method.

9. Method according to any one of the preceding claims further comprising a step to calculate at least one item of information on the orientation of said mobile element, said mobile element comprising at least two localisation modules.

10. Method according to any one of the preceding claims further comprising a step of transmitting at least one item of data from said at least one localisation module to said computer system.

11. Method according to any one of the preceding claims further comprising a step to check the validity (1010, 1112) of said at least one localisation module, said step of sequential activation of said at least one localisation module being performed in response to said validity check step.

12. Method according to claim 11 further comprising a step of assigning (1138, 1140) a state of validity or invalidity to said at least one localisation module, said state of validity or invalidity being determined according to said at least one item of position information.

13. Method according to any one of the preceding claims according to which said step of reception of at least one signal comprises a step of sequential selection of a plurality of receivers, said at least one signal being received by least one receiver selected from said plurality of receivers.

14. Mobile element (100, 110') for a device to interface a plurality of mobile elements with a computer system, said mobile element being **characterized in that** it comprises at least one localisation module (700, 700-1, 700-2), said localisation module comprising the following means,

    - means (730) for emitting a signal for making it possible to calculate the position of said localisation module;
    - means (720, 725) for generating an excitation signal of said means for emitting a signal;
    - switching means (715) for controlling the transmission of said excitation signal to said means for emitting a signal; and,
    - means (710) for receiving an activation signal and, according to at least one item of information of said activation signal, activating said switching means to enable the emission of a signal which can be used to calculate the position of said localisation module, said means for receiving an activation signal comprising means for calculating a time delay value, said time delay value representing a time interval between the reception of an activation signal and the activation of said switching means.

15. Mobile element according to claim 14, said at least one localisation module comprising at least one solenoid, excitable by induction, for electrically supplying components of said at least one localisation module.

16. Device for interfacing a plurality of mobile elements (110, 110') with a computer system, the device comprising a detection surface (115) comprising a grid of row/column type for electromagnetic sensing and means suitable for the implementation of each of the steps of the method according to any one of claims 1 to 13.

Fig. 1

Fig. 3

Fig. 4

Fig. 2

EP 2 612 226 B1

Fig. 5

Fig. 6

Fig. 9a

Fig. 9b

Fig. 7

# Fig. 8

EP 2 612 226 B1

**Fig. 10**

i = 0 — 1000

1005 — i < M ? — Non

Oui

V(i) = vrai? — 1010 — Non

Oui

Activation module i — 1015

Réception x,y,z — 1020

P(i).x=x
P(i).y=y
P(i).z= z — 1025

i = i +1 — 1030

**Fig. 11**

i = 0, C= 0 — 1100

1102

Oui — i < M ? — Non

V(i) = vrai — 1104

i = i +1 — 1106

i = 0 — 1108

1110

Oui — i < M ? — Non

1112

Oui — V(i) = vrai? — Non

Activation module i — 1114

Réception x,y,z — 1116

1118

Oui — (x,y,z)=(0,0,0)? — Non — 1122

1120 — V(i) = faux

P(i).x=x
P(i).y=y
P(i).z= z

i = i +1 — 1124

A = 0 — 1126

1130 — Oui — A < K ? — Non

V(c) = faux? — 1128

1132 — Oui — Non

Activation module c

Réception x,y,z — 1134

1136

oui — (x,y,z)=(0,0,0)? — non

1138 — V(c) = faux

V(c) = vrai — 1140

A= A +1, C= C + 1 — 1142

oui — C < M ? — non

1144 — C = 0 — 1146

Fig. 12

Fig. 13a

Fig. 13b

EP 2 612 226 B1

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008238885 A